# FASCICULE DE BREVET EUROPEEN

(11) **EP 3 728 659 B1**
(45) Date de publication et mention de la délivrance du brevet: **27.04.2022**
(21) Numéro de dépôt: 18826050.9
(22) Date de dépôt: 20.12.2018
(51) Int. Cl.: F27B 9/06, F27B 9/40, C21D 9/56, C21D 11/00, F27D 19/00, C21D 9/60, F27B 9/28

(54) **FOUR COMPRENANT UNE UNITÉ DE CONTROLE ASSOCIÉE À DES PROPRIÉTÉS D'INERTIE THERMIQUE D'ÉLÉMENTS CONSTITUTIFS ET MÉTHODE DE CONTRÔLE ASSOCIÉE.**
OFEN MIT EINER STEUERUNGSEINHEIT, DIE MIT THERMISCHEN INERTIAEIGENSCHAFTEN VON BAUTEILEN VERBUNDEN IST, UND VERBUNDENEM STEUERVERFAHREN.
OVEN COMPRISING A CONTROL UNIT ASSOCIATED WITH THERMAL INERTIA PROPERTIES OF CONSTITUTING ELEMENTS AND CONTROL METHOD ASSOCIATED.

(30) Priorité: 20.12.2017 BE 201705965
(43) Date de publication de la demande: 28.10.2020
(73) Titulaire: Drever International S.A., 4031 Liège (Angleur) (BE)
(72) Inventeur: LHOEST, Alexandre, 4700 Eupen (BE); MARTINS, Daniel, 4140 Sprimont (BE)
(74) Mandataire: Gevers Patents
(86) Numéro de dépôt international: PCT/EP2018/086421
(87) Numéro de publication internationale: WO 2019/122252

(56) Documents cités:
- GB-A- 1 151 243
- JP-A- H06 108 317
- JP-B2- 5 000 116
- US-A- 5 770 838

## Description

### Domaine technique

L'invention se rapporte à un four pour le traitement thermique de bande(s) et/ou pièce(s) métallique(s) par défilement.

### Etat de la technique

Le document US 5 770 838 décrit un four pour le chauffage de pièces métalliques apte à contrôler la température des sections du four selon des plages de température de bande prédéterminées. Le chauffage dans ce type particulier de four est assuré par des tubes de chauffage radiant ainsi que par une section de chauffage par induction composée de plusieurs éléments. Le contrôle de la température est basé sur des mesures de températures de zones du four.

Le document JP 5 000116 B2 décrit un four de chauffage étant équipé d'un appareil de contrôle pour contrôler la température de la bande d'acier, des rouleaux de transport, du rouleau de direction d'agitation, du rouleau de bride et du rouleau de transport supérieur. L'appareil de commande contrôle la sortie de la température du gaz, le volume d'écoulement et le dispositif de chauffage par induction fourni à la buse de pulvérisation de gaz sur la base de la température de mesure des autres rouleaux de la bande d'acier et du transport rouleaux.

Les dispositifs de chauffage par induction utilisés en plus des tubes de chauffage radiant permettent de faire varier la température d'une pièce métallique à l'intérieur du four plus rapidement que les tubes de chauffage radiant. Les dispositifs de chauffage par induction sont souvent contrôlés par un mécanisme de contrôle différents de celui des tubes de chauffage radiant. Les dispositifs de chauffage par induction sont connus pour permettre un meilleur contrôle de la température de bande en sortie de la zone de chauffe du four..

Dans l'état de la technique présenté dans US 5 770 838, les dispositifs de chauffage par induction permettent un apport énergétique contrôlé de manière à atteindre pendant les transitoires des températures de bande en sortie de four souhaitées. Lors de phases transitoires de produits en défilement ayant des propriétés différentes, le contrôle de four décrit par US 5 770 838 ne permet pas la prise en compte de l'apport énergétique instantané des éléments du four autre que la puissance fournie aux dispositifs de chauffe du four. Il s'ensuit que le contrôle en température des bandes et/ou produits métalliques en défilement n'est pas optimal. Un problème à résoudre est donc de permettre un meilleur contrôle de l'apport énergétique délivré par un four à un produit métallique en défilement.

### Résumé de l'invention

Selon un premier aspect, un des buts de l'invention est de fournir un four présentant un meilleur contrôle en température des bandes et/ou produits métalliques en défilement.

A cet effet, les inventeurs proposent un four selon la revendication 1.

Les avantages du four selon l'invention sont de :
- permettre un meilleur contrôle des énergies échangées dans un four afin d'atteindre des températures de bandes fixées, qui sont déterminées par les objectifs de qualité cibles pour une bande métallique en défilement ;
- prendre en compte une quantité de chaleur emmagasinée par un élément constitutif du four, ou qui sera emmagasinée en gestion prévisionnelle de transition par un élément constitutif du four. On pourrait appeler ou nommer propriété d'inertie thermique par paramètre inertiel ou paramètre inertiel d'échange de chaleur.

Une gestion globale de l'apport énergétique est basée sur la détermination de paramètres physiques d'un élément constitutif du four et notamment au moins une propriété d'inertie thermique d'un élément constitutif du four. L'importance de bien prendre en compte des paramètres physiques d'éléments ayant une inertie thermique pour le contrôle du four afin d'obtenir la qualité de bande visée, est que les éléments constitutifs du four impliquent un transfert énergétique supplémentaire pendant un temps généralement long. Un transfert énergétique étant par exemple un échange de chaleur. Les moyens de détermination des paramètres physiques des éléments ayant une inertie thermique constitutifs du four permettent notamment un suivi dans le temps des influences énergétiques des éléments constitutifs du four ayant une inertie thermique. L'unité de contrôle est configurée pour contrôler le ou les éléments constitutif du four et en particulier au moins une unité de chauffe et un élément de chauffe rapide pour faire varier la température d'un produit métallique, après avoir pris en compte l'impact énergétique des éléments constitutifs du four ayant une inertie thermique sur le processus global d'échange de chaleur du four, permet de définir et d'envoyer une consigne en ligne (discrète ou continue) vers l' unité de chauffe et l'élément de chauffe rapide pour faire varier la température d'un produit métallique dans le four. Cette consigne permet un meilleur contrôle de l'apport et/ou du retrait d'énergie qui prend place dans le four afin de réaliser l'objectif de qualité du produit en défilement. Un avantage de l'invention est de permettre un contrôle de l'apport énergétique délivré par un four dans sa globalité à un produit métallique en défilement.

Selon l'invention revendiquée, l'unité de contrôle du four est apte à contrôler l'au moins une unité de chauffe et l'élément de chauffe rapide sur au moins la base d'une masse d'un élément constitutif du four. Des exemples de propriétés d'inertie thermique d'un élément constitutif du four sont : une masse, une température, une chaleur spécifique (ou capacité thermique massique). On pourrait aussi dire que lesdites masse, température et chaleur spécifique d'un élément constitutif du four sont des paramètres physiques qui permettent de déterminer une propriété d'inertie thermique dudit élément constitutif. Ainsi, selon certains modes de réalisation possibles de l'invention, l'unité de contrôle du four selon l'invention est apte à contrôler l'au moins une unité de chauffe et l'élément de chauffe rapide sur la base d'une masse d'un élément constitutif du four et/ou d'une température et/ou d'une capacité thermique massique d'un ou plusieurs éléments constitutifs dudit four.

Un avantage principal de l'invention est de permettre un meilleur contrôle en température pour le traitement thermique d'une bande et/ou d'un produit métallique en défilement. Les fours de l'état de la technique ne permettent pas un contrôle aussi fin au niveau de l'inertie thermique des éléments constitutifs du four. Ainsi les fours de l'état de la technique ne permet pas la prise en compte d'une propriété thermique d'inertie par l'unité de contrôle du four. Des fours de l'état de la technique sont par exemple limités à la mesure d'une température de rouleau qui est comparée à une température de bande de sorte que la température de rouleau soit ajustée à la température de bande. De tels fours ne permettent pas une bonne richesse de contrôle de la température de bande pour un traitement thermique car de tels four ne prennent pas en compte une propriété thermique d'inertie d'un élément constitutif du four. La prise en compte d'une propriété thermique d'inertie d'un élément constitutif du four par l'unité de contrôle permet d'anticiper des variations de température de bandes souhaitées en agissant sur les éléments de chauffe actifs, alors que les fours de l'état de la technique permettent simplement la régulation d'une température de consigne d'un élément constitutif du four avec les retards qu'un système de régulation entraîne. Ainsi l'invention présente l'avantage de permettre une variation d'une température de bande plus rapide et mieux contrôlée, ce qui est particulièrement intéressant en terme de rendement de longueur de bande traitée avec la ou les température visées pour le traitement thermique.

De préférence, un des buts de la présente invention est de fournir un four doté d'un système de contrôle de la température de bande et/ou de un ou plusieurs paramètres représentatifs de la qualité visée permettant une gestion intégrant les échanges énergétiques à travers les éléments constitutifs du four et en particulier par les tubes de chauffage radiant ou tubes de chauffage radiant présents dans le cas d'échanges de chaleur indirects, ainsi que par exemple d'autres équipements comme des rouleaux, les murs, la voûte, la sole..., qui comprennent des facteurs inertiels importants que l'on retrouve aussi dans le cas d'autres types de fours comme dans le cas des fours à flamme directe, des fours de chauffage électriques... Par exemple, les rouleaux, les murs, la voûte et la sole d'un four à éléments radiants peuvent être considérés comme éléments ayant une inertie thermique importante, en plus des tubes de chauffage radiants eux-mêmes. Pour les fours sans élément radiant, le facteur inertiel des éléments radiant est inexistant, mais les autres facteurs restent. Les parois du four comprennent par exemple les murs, la voûte et la sole du four. Par exemple une température d'un tube de chauffage radiant comme une résistance électrique ou un tube radiant peut être considérée comme une propriété d'inertie thermique dans le cadre de l'invention. Par exemple une température de rouleau et plus particulièrement une température de centre ou de bord de rouleau peut être considérée comme une propriété d'inertie thermique dans le cadre de l'invention. Un circuit de refroidissement avec un groupe moto-ventilateur et éventuellement un échangeur thermique peut être considéré comme une propriété d'inertie thermique dans le cadre de l'invention.

De préférence, la détermination et la prise en compte des propriétés d'inertie thermique par l'unité de contrôle permettent de définir des consignes vers les éléments constitutifs du four et en particulier l'unité de chauffe et l'élément de chauffe rapide pour faire varier la température d'une pièce métallique dans le four. Par exemple une zone de four comprenant une pluralité d'éléments, par exemple des tubes de chauffage radiants, en prenant en compte en plus de la puissance fournie à ces tubes de chauffe radiants, une ou plusieurs propriétés d'inertie thermique des équipements du four permet à l'unité de contrôle de définir et d'envoyer des consignes permettant d'avoir des points de fonctionnement mieux contrôlés que par la simple prise en compte de la puissance fournie aux tubes de chauffage radiants qui sera transmise au produit. Cela présente de multiples avantages et notamment celui de permettre un ajustement des points de fonctionnement plus précis intégrant le four dans sa globalité lors d'un changement de produit ayant des caractéristiques et/ou cibles différentes en défilement dans le four et/ou lors d'un changement de régime de fonctionnement, définissant ainsi une transition de produits et/ou une transition de régime. Une transition désigne lors d'un passage d'un premier produit vers un deuxième produit, un changement du point de fonctionnement de l'installation. Une transition peut être particulièrement couteuse si une partie d'un produit n'ayant pas pu être traitée thermiquement dans ses limites de qualité doit être considérée comme rebut en fin de traitement thermique de façon partielle ou totale.

Un four est généralement composé de plusieurs sections, par exemple de chauffe, de maintien, de refroidissement, etc., chacune avec ses fonctionnalités et objectifs de qualité cible de produit. Une section peut être divisée en sous-sections. De préférence, le four comprend une ou plusieurs unités de chauffe. De préférence chaque section comprend une ou plusieurs unités de chauffe. De préférence, le four comprend une ou plusieurs unités de contrôle pour contrôler une ou plusieurs unité de chauffe et/ou un ou plusieurs élément de chauffe rapide. De préférence, plusieurs unités de contrôles permettent de contrôler plusieurs sections ou lignes de passe distinctes.

L'invention peut ainsi être adaptée à tout type de fours moyennant l'utilisation de capteurs, par exemple des capteurs de températures permettant la prise en compte des propriétés d'inertie thermique des éléments constitutifs de fours. Un capteur peut être un capteur virtuel dont la valeur peut également être déterminée par calcul, permettant ainsi à l'unité de contrôle d'envoyer à l'unité de chauffe et à l'élément de chauffe rapide pour faire varier la température d'un produit dans le four des consignes prenant en compte les propriétés d'inertie thermique. La prise en compte des propriétés d'inertie thermique permet d'affiner les transitions, de minimiser ou d'éviter des transitions hors tolérances et/ou d'autoriser des transitions avec des variations de paramètres de produits plus étendues. Par exemple, cela permet d'utiliser des écarts de points de fonctionnement et/ou de températures cibles entre deux bandes plus éloignées

De préférence, le four de l'invention est configuré pour le traitement thermique d'un produit métallique ou de plusieurs produits métalliques par défilement. Le fait qu'un produit métallique est au moins en partie dans le four ne signifie pas que le produit métallique est statique dans le four, le produit métallique est de préférence en défilement dans le four lorsqu'il y est au moins en partie.

De préférence, le four comprend des premiers moyens de détermination d'une température de zone du four ou d'une puissance échangée pour estimer un point de fonctionnement du four. Les éléments constitutifs du four sont contrôlés par l'unité de contrôle de façon directe ou indirecte. Les tubes de chauffage radiant, sont par exemple alimentés en gaz combustible, le flux de gaz entrant dans le tube de chauffage radiant ou tube radiant est contrôlé par une vanne de contrôle du gaz. Par exemple cette vanne de contrôle est une électrovanne contrôlée par l'unité de contrôle. Par exemple cette vanne de contrôle est une vanne modulante contrôlée par l'unité de contrôle.

Un produit métallique est par exemple une succession de pièces ou de bandes métalliques généralement déroulées à partir de bobines et mises en enfilade pour un traitement en continu dans un four. Les produits peuvent être jointivement liés, comme par exemple les queues de bobines pouvant être soudées aux têtes de bobines suivantes et former une bande continue. Ou les produits peuvent être proches les uns des autres au point que leur tête et queue subissent des conditions similaires dans les fours lors de leur traitement.

De préférence les éléments constitutifs ayant une inertie thermique du four sont des éléments qui ont la caractéristique d'emmagasiner et de restituer une quantité de chaleur non négligeable par rapport à des éléments non-considérés comme éléments ayant une inertie thermique.

De façon générale, les éléments actifs thermiquement du four, c'est-à-dire permettant un échange de chaleur non négligeable et ayant une faible ou une forte inertie thermique sont les moyens qui permettent d'atteindre une température de bande souhaitée. Dans le cadre de l'invention, les consignes de l'unité de contrôle, prenant en compte des propriétés d'inertie thermique ou paramètres inertiels thermiques (d'échange de chaleur) ainsi que des puissances échangées par les éléments constitutifs du four ou des températures d'éléments actifs dans les échanges (par exemple des tubes radiants en radiation, des températures de fluide en refroidissement) du four permettent d'atteindre l'/les objectif/s de température et/ou de qualité de bande prédéfini/s. Un four peut être divisé en section, chaque section ayant un objectif de température de bande, que ce soit en chauffe, maintien ou refroidissement. De préférence une température cible de produit est définie par une plage de température cible. De préférence une plage de température cible de produit correspond à des objectifs de qualité de produit donnés. La prise en compte des paramètres inertiels thermiques permet d'affiner les consignes afin de permettre d'obtenir des gammes de température cible les plus réduites possible et de préférence centrées ou comprenant la température de bande cible. Les éléments constitutifs du four étant actifs et/ou passifs du point de vue pouvoir de chauffe. Les éléments passifs étant par exemple les parois, les rouleaux du four. Les éléments passifs n'ont pas la propriété de pouvoir générer de la chaleur (par combustion, résistance électrique, induction) mais ont la propriété de pouvoir en emmagasiner et de pouvoir la restituer.

Par exemple, une propriété d'inertie thermique est une propriété qui caractérise une résistance au changement de température d'un élément constitutif du four lorsqu'on soumet ce dernier à une source de chaleur ou de froid. Une propriété d'inertie thermique peut être comprise comme un paramètre inertiel d'échange de chaleur.

Les propriétés d'inertie thermique sont déterminées sur la base de paramètres physiques : masse, température, chaleur spécifique (appelée aussi capacité thermique massique). D'autres exemples de paramètres physique sont : épaisseur d'une paroi, épaisseur radiale d'un rouleau, dimensions d'un élément constitutif du four.

De préférence, une ou plusieurs propriétés d'inertie thermique d'un ou plusieurs éléments constitutifs dudit four, sont déterminées sur la base de plusieurs masses de plusieurs éléments constitutifs du four.

Une propriété d'inertie thermique est de préférence relative à une quantité d'énergie, à un matériau donné, à une masse donnée, à une température donnée, à une position donnée dans un four et ayant des paramètres d'échanges thermiques donnés.

De préférence, l'au moins un élément constitutif dudit four définissant ladite propriété d'inertie thermique, a une capacité d'échange de chaleur essentiellement définie par au moins un mode de transfert de chaleur suivant : convection, conduction, radiation thermique directe ou indirecte, transformation de phase.

De préférence, le transfert de chaleur entre un rouleau du four et un produit métallique peut se fait essentiellement par conduction et par tout autre mode précité. De préférence, le transfert de chaleur entre une paroi et un produit métallique se faire par convection, radiation thermique indirecte ou par tout autre mode précité. De préférence, le transfert de chaleur entre une unité de chauffe se fait essentiellement par radiation thermique directe et éventuellement par convection ou tout autre mode précité. De préférence, des moyens de refroidissement peuvent être utilisés pour transférer de la chaleur du produit métallique vers les moyens de refroidissement par transformation de phase, par exemple avec l'utilisation de pentane.

Une capacité d'échange de chaleur par radiation thermique directe est par exemple une flamme, une capacité d'échange de chaleur indirecte est par exemple un dispositif de chauffe radiant (tube de chauffe radiant), ou un dispositif dans lequel un élément chaud ou froid, suivant que l'on veuille chauffer ou refroidir, circule. Un élément de four, par exemple un dispositif de chauffage radiant ayant une masse sensible et échangeant thermiquement présente une inertie thermique sensible comparé à un élément constitutif du four mettant en jeux des masses faibles et/ou induisant un changement de température intrinsèque faible de l'équipement, comme par exemple un dispositif de chauffe rapide, par exemple par induction. Par exemple, un chauffage à flamme directe, ne devant chauffer que peu ou pas de masse propre pourra dans un four à tube radiant être considéré comme rapide.

De préférence, ledit au moins un dispositif comprend un élément de chauffe rapide pour faire varier la température d'un produit métallique.

De préférence, le ou les éléments de chauffe rapides pour faire varier la température d'un produit métallique ont une faible inertie thermique, c'est-à-dire qu'ils ne sont pas inertiellement présents ou qu'ils génèrent des effets inertiels négligeables en comparaison des effets inertiels des éléments de chauffe de type tubes radiants indirects ou de certaines parties du four comme par exemple les rouleaux, les parois du four ou des échangeurs. Par exemple un élément de chauffe rapide pour faire varier la température d'un produit métallique est un chauffage à flamme directe, celui-ci devant chauffer pas ou peu de masse ne génère pas ou peu d'inertie comparé à un four à tube radiant.

Par exemple, un élément de chauffe rapide pour faire varier la température d'un produit métallique est mis en début de four : avant une préchauffe, après une préchauffe, éventuellement avant que les produits à traiter n'atteignent un paramètre physico-chimique comme le point de Curie. Dans un mode de réalisation préféré de l'invention, par exemple un four déjà existant pour lequel il est possible d'y implanter la présente invention, ce four se verra disposer d'éléments constitutifs du four dont au moins un élément constitutif est un élément de chauffe rapide pour faire varier la température d'un produit métallique. Par exemple un élément de chauffe rapide pour faire varier la température d'un produit est un élément de chauffe peu inertiel.

De préférence, le four selon l'invention comprend un premier élément de chauffe rapide pour faire varier la température d'un produit métallique et un deuxième dispositif, en particulier un élément de chauffage radiant, ayant des propriétés d'inertie thermique pris en compte par l'unité de contrôle.

Un élément de chauffe rapide pour faire varier la température d'un produit métallique est par exemple un inducteur, une flamme directe ou encore un élément/dispositif de refroidissement qui par exemple pilote une électrovanne tout ou rien contrôlant le passage d'un fluide dans des éléments permettant un échange de chaleur avec les éléments du four et ou le produit métallique dans le four.

Par exemple, un four à tubes radiants dispose dans la section de chauffe d'un dispositif de refroidissement par convection, qui est un dispositif rapide avec des paramètres inertiels différents.

Par exemple, un élément de refroidissement comprend deux paramètres inertiels principaux : 1 ° en refroidissement par convection forcée, la montée/descente en vitesse des groupes moteur-ventilateurs ; 2° les échangeurs typiquement gaz-eau dont le point de fonctionnement va changer ont leur propre inertie. La combinaison de rampes à eau, à effet immédiat, avec des refroidissements à convection, liés aux moteurs-ventilateurs plus lents et éventuellement lié à des échangeurs thermiques donne une solution avec des équipements ayant des paramètres inertiels différents.

Un avantage de disposer d'un élément de chauffe rapide pour faire varier la température d'un produit métallique est de permettre de minimiser les temps/longueurs de transitoires.

De préférence, ledit élément de chauffe rapide est un élément de chauffe par induction pour faire varier la température par induction d'un produit métallique..

Les éléments de chauffe rapides pour faire varier la température d'un produit métallique, dans ce cas particulier par induction, permettent un contrôle plus dynamique de la température de la bande dans le temps et sur des distances relativement courtes en comparaison par exemple d'éléments de chauffage radiant. Dans le cas d'un four équipé d'éléments radiants (tubes de chauffage), ceux-ci ne permettent pas un contrôle aisé de la température dans le temps de par leur inertie plus grande et nécessitent souvent des distances de bandes plus grandes.

De préférence, un élément de chauffe rapide pour faire varier la température d'un produit métallique ou un élément de chauffe rapide pour faire varier la température par induction d'un produit métallique est positionné en amont d'au moins un élément constitutif dudit four de type à tube de chauffage radiant. En amont est relatif au défilement de la bande. En amont signifie qu'une portion de la bande passe en premier à proximité de l'élément de chauffe rapide puis à proximité de l'élément de chauffe constitutif du four de type tube de chauffage radiant. Un intérêt de mettre l'inducteur en amont, est de le mettre dans une zone encore froide du four, ce qui est constructivement et/ou opérationnellement plus facile. En termes de gestion de transitoires, il y aurait davantage intérêt à mettre un inducteur le plus loin possible sur le trajet du produit dans une section de chauffe, mais typiquement avant le point de Curie pour des inducteurs fonctionnels uniquement avec des produits magnétiques, ou après le point de Curie si la technologie de l'inducteur le permet comme celle des inducteurs transversaux.

De préférence, l'unité de contrôle est apte à contrôler ladite unité de chauffe et/ou l'élément de chauffe rapide sur la base d'une température d'un élément constitutif dudit four et/ou sur la base d'une capacité thermique massique d'un élément constitutif dudit four.

De préférence, le four comprend une ou plusieurs unité de contrôle pour contrôler une ou plusieurs unités de chauffe et/ou un ou plusieurs éléments de chauffe rapide. Préférentiellement, il est possible d'utiliser plusieurs masses de plusieurs éléments constitutifs du four. Préférentiellement, il est possible d'utiliser plusieurs capacité thermique massiques de plusieurs éléments constitutifs du four.

De préférence, lesdits éléments constitutifs comprennent en outre un ou plusieurs rouleaux pour transporter et/ou guider ledit produit métallique dans ledit four et en ce que ladite unité de contrôle est apte à contrôler ladite unité de chauffe et/ou l'élément de chauffe rapide sur la base d'une ou plusieurs propriétés d'inertie thermique d'un ou plusieurs rouleaux. De préférence, le four comprend une ou plusieurs unité de contrôle pour contrôler une ou plusieurs unités de chauffe et/ou un ou plusieurs éléments de chauffe rapide.

De préférence, ladite unité de contrôle est apte à contrôler ladite unité de chauffe et/ou l'élément de chauffe rapide sur la base d'une ou plusieurs températures d'un ou plusieurs rouleaux. Alternativement, il est possible d'utiliser une masse et/ou une capacité thermique massique des rouleaux De préférence, le four comprend une ou plusieurs unité de contrôle pour contrôler une ou plusieurs unités de chauffe et/ou un ou plusieurs éléments de chauffe rapide.

De préférence ,ladite unité de contrôle est apte à contrôler ladite unité de chauffe et/ou l'élément de chauffe rapide sur la base d'une propriété d'inertie thermique d'une paroi. Une propriété d'inertie thermique d'une paroi est par exemple : la masse d'une paroi, la température d'une paroi (profil de température), la capacité thermique massique d'une paroi. De préférence, le four comprend une ou plusieurs unité de contrôle pour contrôler une ou plusieurs unités de chauffe et/ou un ou plusieurs éléments de chauffe rapide.

De préférence, les parois sont en outre caractérisées par des températures de parois, des épaisseurs de parois et des capacités calorifiques de parois,
et en ce que l'unité de contrôle est apte à contrôler ladite au moins une unité de chauffe et ledit élément de chauffe rapide à partir d'un paramètre inertiel d'échange de chaleur comprenant :
- des températures de parois,
- des épaisseurs de parois, et,
- des capacités calorifiques de parois.

Les parois du four sont de préférence des éléments du four représentant une grande inertie thermique. Il parait particulièrement avantageux de bien prendre en compte leur inertie thermique car lors d'un changement de régime du four, les parois vont être en grande partie responsables du temps de transition entre deux régimes de four. Ainsi afin de déterminer une propriété d'inertie thermique, l'unité de contrôle reçoit des informations relatives à des températures de parois par les moyens de détermination et a déjà à sa disposition, des informations relatives aux épaisseurs de parois et aux capacités calorifiques des parois. De préférence, l'unité de contrôle pondère la propriété d'inertie thermique de la paroi du four en fonction de la distance du produit métallique avec la paroi ayant une propriété d'inertie thermique donnée en un temps donné.

De préférence, les épaisseurs de parois et les températures de parois étant combinées en des profils de température de parois selon l'épaisseur des parois, ladite propriété d'inertie thermique comprenant :
- lesdits profils de température de parois,
- lesdites capacités calorifiques de parois.

De préférence, l'unité de contrôle est apte à contrôler ladite au moins une unité de chauffe et/ou ledit élément de chauffe rapide sur base de profils de température au travers (ou tout au long) desdites parois.

La détermination d'une propriété d'inertie thermique de paroi est de préférence issue de plusieurs portions de paroi. Une portion de paroi pouvant être la voute, la sole, les murs ou tout autre élément structurel du four, par exemple un mur interne destiné à soutenir la voute. Les parois ou portion de paroi étant construites en matériaux réfractaire ayant des capacités calorifique élevés, il est particulièrement pertinent de considéré un profil de température de paroi sur l'épaisseur de la paroi ou des portions de paroi afin de prendre en compte de façon plus précise la quantité de chaleur qui y est emmagasinée. En effet, il existe une grande différence de quantité de chaleur emmagasinée dans les parois/portions de paroi pour un four opérant à une température prédéfinie venant d'être mis en route et un four opérant à une température prédéfinie mais ayant opéré auparavant à une température bien supérieure à la température prédéfinie. Ainsi le profil de température des parois du four dans les deux situation exposée diffère, bien qu'une température de paroi de surface à l'intérieur du four puisse être essentiellement la même. Ainsi, le profil de température de paroi/portion de paroi permet de prendre en compte l'historique de température du four. Le profil de température est par exemple une courbe ayant pour abscisse l'épaisseur de paroi/portion de paroi avec les bornes surface de paroi externe et interne, et ayant pour ordonnée une température ou une quantité de chaleur. Un profil de température selon l'invention permet de mieux bien prendre en compte la quantité de chaleur emmagasinée par la paroi/portion de paroi qu'une simple mesure de la température de paroi en surface. Un profil de température de paroi est par exemple modélisé à partir d'information de température de surface de paroi intérieure et extérieure dans le temps, des matériaux composant la paroi et de l'épaisseur.

De préférence, lesdits profils de température de parois sont déterminés sur la base d'une information historique (ou du passé) et/ou future de température. L'invention permet de faire du contrôle prédictif et donc de prévoir des évolutions futures à apporter au four.

Comme mentionné précédemment, de préférence, le profil de température de paroi est déterminé sur la base d'une information historique et/ou future de température afin de bien prendre en considération la diffusion de la chaleur à l'intérieur de la paroi. Une telle information historique de température permet de s'affranchir de moyens de détermination de température à l'intérieur de la paroi. En effet, une information historique de température passée permet de modéliser la diffusion de la chaleur dans la paroi de façon tout à fait satisfaisante comparée à des moyens de détermination physiques (pour déterminer la température) positionnés à l'intérieur de la paroi. Une information historique de température est par exemple une température de paroi de surface combinée à une information temporelle. Par exemple une telle information de température passée a eu lieu entre 0 et 15 minutes, de préférence entre 0 et 5 minutes précédant l'instant pour lequel un paramètre inertiel d'échange de chaleur de paroi est déterminé par l'unité de contrôle et pris en compte par celle-ci pour contrôler les éléments de chauffe du four. De préférence, l'information historique de température est une information déterminée par les moyens de détermination.

De préférence, les températures de paroi comprennent une température de paroi intérieure au four et une température de paroi extérieure au four, et en ce que les profils de température de parois sont déterminés sur la base desdites températures de paroi intérieure et extérieure au four.

La détermination d'une température de surface intérieure et extérieure est particulièrement avantageuse car elle permet de suivre avec précision la quantité de chaleur emmagasinée par la paroi. Comme les modes de réalisation précédemment énoncés, cela permet de déterminer avec précision la quantité de chaleur du produit métallique qui sera absorbée par la paroi ou la quantité de chaleur de la paroi qui sera émise vers le produit métallique.

De préférence, ladite unité de contrôle est en outre configurée pour contrôler une vitesse de défilement d'un produit métallique dans ledit four sur la base d'une ou plusieurs propriétés d'inertie thermique d'un ou plusieurs éléments constitutifs dudit four..

La vitesse de défilement des produits est contrôlée en tenant compte des inerties en place dans le four, mais aussi des retards temporels dus aux déplacements de produits dans le four.

De préférence, toute perturbation du traitement, induit une action sur un dispositif pour faire varier la température par induction d'un produit métallique, afin de compenser la perturbation en intégrant les effets inertiels. Par exemple une perturbation est un changement de régime de fonctionnement qui induit une action directe et/ou correctrice intégrant les effets inertiels. Par exemple, la perte d'une zone de chauffe peut être compensée à la volée par un dispositif pour faire varier la température par induction d'un produit métallique.

De préférence, ladite unité de contrôle est en outre configurée pour contrôler ladite au moins une unité de chauffe, ou ledit élément de chauffe rapide, ou ledit tube de chauffage radiant sur la base d'une propriété d'un produit métallique configuré pour défiler dans ledit four.

Une propriété d'un produit est par exemple une propriété physico-chimique, un type de métal, un type d'alliage métallique, une composition d'acier, une dimension comme l'épaisseur ou la largeur de produit, une phase (Austénite, ferrite, martensite, bainite, perlite, etc.), un mélange de phase, un état de surface du produit, une rugosité, des données relatives à un précédent laminage, à un précédent traitement thermique ou métallurgique ou chimique ou de galvanisation, et/ou une variation d'une propriété ou d'une qualité tout au long d'un produit.

De préférence, ladite unité de contrôle est en outre configurée pour contrôler ladite au moins une unité de chauffe et/ou ledit élément de chauffe rapide sur base d'une température de l'unité de chauffe, ou d'une température de l'élément de chauffe rapide, ou d'une température dudit tube de chauffage radiant.

Par exemple une propriété d'inertie thermique d'un élément constitutif du four est une température en surface et/ou intrinsèque d'un élément du four et plus particulièrement d'un élément de chauffage radiant. Par exemple la température de surface d'un élément de chauffage radiant est mesurée par un ou plusieurs thermocouples, et/ou calculée en un point ou plusieurs points, le ou les calculs pouvant se référer à au moins un thermocouple installé dans le four et/ou sur des équipements particuliers. Par exemple, une propriété d'inertie thermique ou tout autre indicateur permet de définir l'état d'inertie d'un élément du four par rapport à un produit métallique en défilement.

De préférence, ladite unité de chauffe comprend un tube de chauffage radiant. De préférence, ledit tube de chauffage radiant a une propriété d'inertie thermique d'une température de tube de chauffage radiant et d'une capacité calorifique de tube de chauffage radiant.

Par exemple, la température d'un tube de chauffage radiant est mesurée avec un thermocouple. Par exemple un thermocouple est positionné près de la surface du tube de chauffage radiant ou en contact de la surface du tube de chauffage radiant.

De préférence, ledit au moins un élément de chauffe comprenant une pluralité de tubes de chauffage radiants, ladite pluralité de tubes de chauffage radiants ayant au moins une propriété d'inertie thermique d'une pluralité de tubes de chauffage radiants dépendant de leurs températures et de leurs capacités calorifiques.

De préférence, le four comprend en outre :
- des rouleaux pour transporter et/ou guider ledit produit métallique dans ledit four, lesdits rouleaux ayant des températures de rouleaux,
lesdits rouleaux ayant des propriétés thermiques dépendant des températures desdits rouleaux.

De préférence, lesdits rouleaux comprennent chacun une portion centrale en contact avec la bande et deux bords non en contact avec la bande. Par exemple un rouleau disposant d'un profil auto-centrant permet de guider la bande lors de son défilement dans le four. Le rouleau est caractérisé en terme de procédé thermique par un centre étant en contact et/ou dans la zone de passage de ladite bande, et par des bords, les bords n'étant en situation normale pas en contact avec ladite bande. La dimension d'un bord de rouleau peut être considérée comme variable en fonction de la largeur de la bande. Le centre des rouleaux en contact avec la bande et plus particulièrement leur température de rouleau au centre et/ou les caractéristiques thermiques des rouleaux au centre sont de façon préférée considérés comme faisant partie intégrante des propriétés d'inertie thermiques du processus d'échanges thermique avec principalement le produit dans le four. Les bords de rouleaux et plus particulièrement leur température et/ou leurs caractéristiques thermiques sont de façon préférée considérés comme des paramètres inertiels principaux d'échange de chaleur du four. Par exemple la partie centrale et/ou les bords sont des paramètres inertiels thermiques intervenant dans le four.

Une analogie concernant une propriété d'inertie thermique de rouleau avec une propriété d'inertie thermique de paroi est possible. Les propriétés physiques spécifiques des rouleaux sont : une température externe de rouleau, une température interne de rouleau, une épaisseur radiale de rouleau une largeur de rouleau, une information de température passée de rouleau, un diamètre de rouleau, une capacité calorifique de rouleau, ... Un profil de température de rouleau est par exemple pris en considération dans la détermination d'une propriété d'inertie thermique de rouleau. Les avantages liés à la prise en compte d'une propriété d'inertie thermique de paroi s'applique *mutatis mutandis* à un paramètre d'échange de chaleur de rouleau.

Un modèle de rouleau multicouche est par exemple utilisé par l'unité de contrôle de sorte à fournir une propriété d'inertie thermique de rouleau plus précis. Un tel modèle de rouleau multicouche permet de définir une multitude de couche autour de l'axe du rouleau et composant le rouleau afin d'assigner une information de température ou de quantité de chaleur à chaque couche du rouleau. Un modèle de rouleau multicouche permet par exemple de déterminer un profil radial de température de rouleau. Un tel modèle de rouleau multicouche peut être vérifié par l'utilisation de thermocouple à différentes position radiale d'épaisseur.

De préférence, ledit au moins un paramètre d'échange de chaleur est une propriété d'inertie thermique de chaleur d'au moins un des éléments constitutifs dudit four suivants : lesdits rouleaux ;lesdites parois ;lesdits tubes de chauffage radiants.

De préférence, l'élément de chauffe par induction est un inducteur effectif sur des produits métalliques amagnétiques, celui-ci étant positionné en aval d'une unité de chauffe ayant une capacité d'échange de chaleur essentiellement définie par au moins un des modes de transfert de chaleur suivant : convection, conduction, radiation thermique directe ou indirecte, transformation de phase, transformation physico-chimique, de préférence l'élément de chauffe étant un tube de chauffage radiant. Selon un autre mode de réalisation, le dispositif par induction est un inducteur effectif sur des produits magnétiques.

Dans le cas de dispositif rapide pour faire varier la température d'un produit métallique dans le four de type inducteur fonctionnant sur des produits dont les caractéristiques sont amagnétiques comme par exemple au-delà du point de Curie sur des aciers, ceux-ci peuvent être positionnés dans le four, par exemple presque à la fin du four ou à la fin d'une zone où une cible de qualité doit être atteinte, car ils permettent de compenser les inerties thermiques au plus proche de la cible.

De préférence, le four comprend :
- une première portion pour faire varier la température d'un produit métallique comprenant au moins une unité de chauffe ou un élément de chauffe rapide, et,
- une deuxième portion pour maintenir la température d'un produit métallique comprenant au moins une unité de chauffe ou un élément de chauffe rapide,
caractérisé en ce que ladite unité de contrôle est apte à :
- contrôler ladite unité de chauffe ou ledit élément de chauffe rapide de ladite première portion pour faire varier la température d'un produit métallique, et,
contrôler ladite unité de chauffe ou ledit élément de chauffe rapide de ladite deuxième portion pour faire varier ou maintenir la température d'un produit métallique.

Par exemple, une portion comprend au moins une portion d'élément constitutif du four pouvant changer dynamiquement d'état fonctionnel pour faire varier ou maintenir la température d'une pièce métallique dans une deuxième portion du four.

De préférence les dispositifs rapides pour faire varier la température d'un produit métallique permettent lors d'une modification de température cible de produit et/ou de caractéristique de produit et/ou de régime de fonctionnement, d'atteindre une température cible de produit, c'est-à-dire d'atteindre une plage de température comprenant la température cible, plus rapidement et/ou plus précisément qu'avec des éléments de chauffe de type tube radiant.

De préférence, les dispositifs rapides pour faire varier la température d'un produit métallique permettent lors d'une modification de température cible et/ou de qualité de produit et/ou de régime de fonctionnement, une modification du profil de température de bande dans le four mieux maîtrisée qu'avec des dispositifs pour faire varier la température d'un produit métallique de type tube de chauffe radiant. De préférence, un avantage de ce mode de réalisation est de pouvoir faire basculer une zone de maintien en chauffe dynamiquement, ou de la faire revenir en maintien dynamiquement.

Par exemple, un autre inconvénient de l'état de la technique lorsqu'un produit suivant nécessite un apport énergétique moindre par rapport à la bande actuelle est que cela mène souvent à une surchauffe partielle ou totale d'un deuxième produit suivant en défilement par rapport à une gamme de température cible alors que ce deuxième produit nécessite un apport énergétique moindre qu'un premier produit le précédant. Il en est de même lorsqu'un apport énergétique plus important est nécessaire, cela conduit à un apport de chaleur insuffisant. Un premier produit peut être une première portion de bande et un deuxième produit une deuxième portion de bande. De préférence, une première portion de bande précède une deuxième portion de bande.

Ainsi l'état de la technique ne permet pas une bonne gestion des transitoires lorsqu'un premier produit en défilement nécessite un apport énergétique différent d'un deuxième produit en défilement qui suit le premier produit en défilement. Par exemple, un premier produit en défilement nécessite un apport énergétique plus important qu'un deuxième produit en défilement, l'invention permet d'adapter l'échange énergétique nécessaire en prenant en compte les propriétés d'inertie thermique d'éléments constitutifs du four et permet d'anticiper un changement sur une portion de produit afin de fournir une quantité d'énergie adaptée lors du changement vers le produit suivant.

L'invention permet une meilleure gestion de ces transitoires en prenant en compte l'interaction énergétique des éléments du four ayant une inertie thermique, un cas particulier étant la température des éléments de chauffage radiant. L'avantage de prendre en compte la température par exemple des tubes radiants, comme tout élément constitutif du four ayant une inertie thermique, est que cela permet de prédire leur interaction énergétique dans les phases transitoires tout en veillant à rester dans une plage de température de bande cible pour les premier et deuxième produits. La gestion de la température de produit étant principalement définie par l'échange énergétique qui lui est appliqué, auquel s'ajoute les échanges énergétiques avec les équipements du four. L'invention permet ainsi de mieux intégrer les propriétés d'inertie thermique des éléments constitutif du four ayant une inertie thermique et en particulier des éléments à chauffage radiant, des parois du four, des rouleaux et tout élément constitutif du four.

L'amélioration des transitions présente certaines limites pour un four dans lequel les consignes vers les dispositifs pour faire varier la température d'un produit métallique sont uniquement définies sur la base d'une puissance à échanger avec le produit et/ou une/des température/s de zones et/ou des régimes de refroidissement pour y arriver. Les fours peuvent comprendre une combinaison de dispositifs plus rapide(s) et d'élément(s) constitutif du four plus lent(s), par exemple des tubes de chauffage radiant pour faire varier la température d'une pièce métallique. Pour étendre la plage de gestion de transitoires et ainsi avoir une plus grande flexibilité entre la température de traitement d'un premier et d'un deuxième produit, la prise en compte des propriétés d'inertie thermique semble alors utile et avantageuse.

Le terme échange de chaleur ou le terme de chauffe devrait être interprété comme relatif à la variation d'une température de produit, relatif à une variation positive de température, mais peut par exemple être relatif à une variation négative de température ou encore à une variation de température nulle nécessitant un équilibre entre la chaleur reçue par le produit et la chaleur émise par le produit, qui donne en final un maintien de la température du produit.

De préférence, ledit produit métallique est une pièce ou une bande métallique.

De préférence, une action sur le guidage dudit produit métallique lors de son défilement dans ledit four permet de transformer ledit produit métallique en dispositif rapide pouvant faire varier la température d'au moins un rouleau de sorte qu'un profil de température dudit au moins un rouleau peut être modifié.

De préférence, des actions temporaires sur le guidage de bande permettent de transformer la bande en dispositif rapide afin de modifier dynamiquement le profil du/des rouleaux de four.

De préférence, le four comprend en outre des moyens de détermination aptes à déterminer au moins un paramètre physique pour déterminer une ou plusieurs propriété d'inertie thermique d'un ou plusieurs éléments constitutifs du four.

Un autre but de la présente invention est de mieux prendre en compte ce qui s'apparente à des temps morts d'éléments de chauffe radiants. Les éléments de chauffe radiants comme les tubes radiants présentent un temps mort, phénomène assez mal considéré. La flamme se développe à l'intérieur du tube et tout changement de puissance commence à produire ses effets sur le produit cible après que le flux de chaleur ait traversé la paroi de l'élément radiant. Lors d'une diminution de puissance, la surface radiante de l'élément radiant perd en température, mais est alimentée en énergie par la masse interne de l'élément radiant qui se relaxe thermiquement. Par ailleurs, ces temps morts apparents s'ajoute aux temps morts de toute la chaîne de contrôle : interface vers les systèmes supérieurs donnant les informations primaires sur les produits, le temps de cycle du système de contrôle - quel que soit le système de contrôle, pouvant être une combinaison de plusieurs unités de contrôle particulières et leur interaction, la réactivité d'éventuelles boucles de contrôle intermédiaires, la communication vers les sorties du système de contrôle du four et la réactivité des éléments de contrôle comme l'instrumentation de contrôle.

Selon un second aspect, les inventeurs proposent un procédé selon la revendication 12.

Les avantages et différents modes de réalisation du four selon le premier aspect s'appliquent au procédé selon le deuxième aspect de l'invention, *mutatis mutandis.*
Procédé selon la revendication précédente caractérisé en ce que ledit élément de chauffe rapide dudit four est un élément de chauffe par induction pour faire varier la température par induction d'un produit métallique.

De préférence :
ladite unité de contrôle est apte à contrôler ladite unité de chauffe et/ou l'élément de chauffe rapide sur la base d'une température d'un élément constitutif dudit four et/ou sur la base d'une capacité thermique massique d'un élément constitutif dudit four, et en ce que,
- l'étape a) comprend en outre la détermination d'une température d'un élément constitutif dudit four et/ou d'une capacité thermique massique d'un élément constitutif dudit four,
- l'étape b) comprend en outre de fournir une température d'un élément constitutif dudit four et/ou d'une capacité thermique massique d'un élément constitutif dudit four,
- l'étape c) comprend en outre le contrôle de ladite unité de chauffe et/ou l'élément de chauffe rapide sur la base d'une température d'un élément constitutif dudit four et/ou sur la base d'une capacité thermique massique d'un élément constitutif dudit four.

De préférence ledit four comprend en outre :
- des rouleaux pour transporter et/ou guider ledit produit métallique dans ledit four, et en ce que :
- l'étape a) comprend en outre la détermination d'une ou plusieurs propriétés d'inertie thermique d'un ou plusieurs rouleaux ;
- l'étape b) comprend en outre de fournir à l'unité de contrôle une ou plusieurs propriétés d'inertie thermique d'un ou plusieurs rouleaux ;
- l'étape c) comprend en outre le contrôle sur la base d'une ou plusieurs propriétés d'inertie thermique d'un ou plusieurs rouleaux.

De préférence :
- l'étape a) comprend en outre la détermination d'une ou plusieurs températures d'un ou plusieurs rouleaux ;
- l'étape b) comprend en outre de fournir à l'unité de contrôle d'une ou plusieurs températures d'un ou plusieurs rouleaux ;
- l'étape c) comprend en outre le contrôle sur la base d'une ou plusieurs températures d'un ou plusieurs rouleaux.

De préférence :
- l'étape a) comprend en outre la détermination d'une propriété d'inertie thermique d'une paroi ;
- l'étape b) comprend en outre de fournir à l'unité de contrôle d'une propriété d'inertie thermique d'une paroi ;
- l'étape c) comprend en outre le contrôle sur la base d'une propriété d'inertie thermique d'une paroi.

De préférence, ledit élément de chauffe rapide est un élément de chauffe par induction pour faire varier la température par induction d'un produit métallique.

De préférence,
- lesdites parois dudit four sont en outre caractérisées par des températures de parois, des épaisseurs de parois et des capacités calorifiques de parois, en ce que :
- l'étape a) comprend en outre la détermination :
   o des températures de parois,
   o des épaisseurs de parois, et,
   o des capacités calorifiques de parois ;
- l'étape b) comprend en outre de fournir :
   o des températures de parois,
   o des épaisseurs de parois, et,
   o des capacités calorifiques de parois ;
- le contrôle de l'étape c) comprend en outre le contrôle de ladite unité de chauffe et/ou l'élément de chauffe rapide sur la base :
   o des températures de parois,
   o des épaisseurs de parois, et,
   o des capacités calorifiques de parois.

De préférence :
- l'étape a) comprend en outre une détermination des profils de température de parois selon l'épaisseur des parois en combinant les épaisseurs de parois et les températures de parois,
- l'étape b) comprend en outre de fournir des profils de température de parois selon l'épaisseur des parois ;
- l'étape c) comprend en outre le contrôle sur la base des profils de température de parois.

De préférence, la détermination à l'étape a) desdits profils de température de paroi est en outre déterminée sur la base d'une information historique et/ou future de température.

De préférence, la détermination d'une température de paroi de l'étape a) comprend une mesure de température de paroi intérieure au four et une mesure de température de paroi extérieure au four, en ce que les mesures de températures intérieure et extérieure sont fournies à l'unité de contrôle, et en ce que le contrôle de l'étape c) est réalisé sur la base des mesures de température de paroi intérieure et extérieure.

Ladite unité de contrôle est en outre configurée pour contrôler une vitesse de défilement d'un produit métallique dans ledit four, l'étape c) permettant en outre de contrôler ladite vitesse de défilement d'un produit métallique dans ledit four sur la base d'une ou plusieurs propriétés d'inertie thermique d'un ou plusieurs éléments constitutifs du four.

De préférence, ladite au moins une unité de chauffe comprend un tube de chauffage radiant, et en ce que l'étape c) de contrôle permet en outre de contrôler ledit tube de chauffage radiant.

De préférence :
- l'étape a) comprend en outre la détermination d'au moins une température de tube de chauffage radiant ;
- l'étape b) comprend en outre de fournir au moins une température de tube de chauffage radiant ;
- l'étape c) comprend en outre le contrôle sur la base d'au moins une température de tube de chauffage radiant.

De préférence, le contrôle de l'étape c) par ladite unité de contrôle de ladite au moins une unité de chauffe, dudit élément de chauffe rapide, et dudit tube de chauffage radiant dépend d'une propriété d'un produit métallique configuré pour défiler dans ledit four.

De préférence :
- l'étape a) comprend en outre la mesure d'au moins une température d'une unité de chauffe, et/ou d'une température dudit élément de chauffe rapide, et/ou d'une température dudit tube de chauffage radiant ;
- l'étape b) comprend en outre de fournir des mesures de l'étape a) ;
- l'étape c) comprend en outre le contrôle sur la base d'au moins une température d'une unité de chauffe, et/ou d'une température dudit élément de chauffe rapide, et/ou d'une température dudit tube de chauffage radiant.

De préférence :
- une première portion pour faire varier la température d'un produit métallique comprenant au moins une unité de chauffe ou un élément de chauffe rapide, et,
- une deuxième portion pour maintenir la température d'un produit métallique comprenant au moins une unité de chauffe ou un élément de chauffe rapide,
l'étape c) de contrôle comprenant les sous-étapes suivantes :
- contrôler ladite unité de chauffe ou ledit élément de chauffe rapide de ladite première portion sur la base d'au moins une propriété d'inertie thermique pour faire varier la température d'un produit métallique en défilement dans ladite première portion, et,
- contrôler ladite unité de chauffe ou ledit élément de chauffe rapide de ladite deuxième portion sur la base d'au moins une propriété d'inertie thermique pour maintenir la température d'un produit métallique en défilement dans ladite deuxième portion.

De préférence, le procédé comprend en outre l'étape suivante :
d) modifier le guidage dudit produit métallique lors de son défilement dans ledit four afin de permettre de transformer ledit produit métallique en élément de chauffe rapide pouvant faire varier la température d'au moins un rouleau de sorte qu'un profil de température d'au moins un rouleau peut être modifié.

De préférence, le four comprend en outre des moyens de détermination aptes à déterminer au moins un paramètre physique pour déterminer une ou plusieurs propriétés d'inertie thermique d'un ou plusieurs éléments constitutifs du four, et en ce que les moyens de déterminations sont utilisés lors de l'étape a) pour la détermination d'au moins un paramètre physique pour déterminer une ou plusieurs propriétés d'inertie thermique d'un ou plusieurs éléments constitutifs du four.

De préférence, les premier et second aspects de l'invention prévoient que les moyens de détermination sont aptes à déterminer des paramètres d'échange de chaleur des parois, des paramètres d'échange de chaleur des rouleaux, des paramètres d'échange de chaleur des tubes de chauffage radiant et en ce que l'unité de contrôle est apte à contrôler l'unité de chauffe et l'élément de chauffe rapide sur la base d'au moins un des paramètres d'échange de chaleur : paramètres d'échange de chaleur des parois, paramètres d'échange de chaleur des rouleaux, paramètres d'échange de chaleur des tubes de chauffage radiant.
Selon un autre aspect, les propriétés d'inertie thermique selon le premier aspect sont des paramètres d'échange de chaleur ou des paramètres inertiels d'échange de chaleur, par exemple une température, une capacité calorifique, une épaisseur, un volume de matière, un coefficient de radiation. Selon un autre aspect, les paramètre inertiel d'échange de chaleur selon le deuxième aspect sont des paramètres d'échange de chaleur, par exemple une température, une capacité calorifique, une épaisseur, un volume de matière, un coefficient de radiation.

### Fours de réchauffage/recuit

Un four en continu est un équipement qui permet de chauffer un produit qui y défile en continu afin d'atteindre une température nécessaire ou température cible pour aboutir aux propriétés métallurgiques et/ou mécaniques cibles. Le four permet ensuite de refroidir en continu le produit, optionnellement en respectant un profil imposé. Suivant le type de procédé, plusieurs types de fours selon l'invention sont mis industriellement en œuvre :
- par exemple, dans un four vertical à tubes radiants qui est entièrement équipé de tubes radiants, à atmosphère protectrice azote-hydrogène permettant de garantir une atmosphère protectrice à l'intérieur du four ; le produit (ou la bande) s'élève en température tout au long de son trajet dans le four ; le four est équipé avec des rouleaux déflecteurs en contact franc avec le produit à chaque passe verticale, les rouleaux déflecteurs étant principalement positionnés entre les passes verticales. Des zones de refroidissement suivent la partie chauffe ;
- par exemple, dans un four à flamme directe: le produit est introduit à contre-courant des gaz de combustion (préchauffe) et traverse les zones de chauffe à combustion directe. Les murs, la voûte et la sole sont souvent composés de briques réfractaires, accentuant l'inertie thermique de l'équipement. Les zones de refroidissement suivent la partie chauffe ;
- par exemple, dans un four hybride avec une section à flamme directe et une section à atmosphère protectrice et tubes radiants. Des zones de refroidissement suivent la partie chauffe ;
- par exemple, dans un four à chauffage électrique. Des zones de refroidissement suivent la partie chauffe ;
- par exemple, dans un four intégrant une section de chauffage à induction éventuellement combinée avec d'autres types de chauffe. Des zones de refroidissement suivent la partie chauffe.

Les sections de chauffe et maintien sont souvent suivies de zones de refroidissement faisant appel à une ou plusieurs techniques parfois combinées de refroidissement. Par exemple, par radiation, par convection naturelle, par convection forcée, par brouillard de fluide comme de l'eau, par jet de fluide comme de l'eau, par contact franc avec des fluides comme de l'eau, par conduction avec des rouleaux refroidis, par transformation physico-chimique.

### Contraintes de l'équipement four

Lors du réchauffage de la bande dans un four ne comprenant pas de dispositif rapide pour faire varier la température d'un produit métallique, les échanges thermiques typiquement par radiation entre le produit et les brûleurs - en direct ou à travers des éléments radiants - sont de premier ordre. Un chauffage par convection forcée d'un gaz chaud est aussi possible. Lors du refroidissement, les échanges de chaleur par convection forcée - impact d'un gaz refroidi sur la bande - sont un moteur typique des échanges thermiques. Dans les refroidissements directs par eau, la conduction est généralement le moteur thermique. Les équipements d'un four apportent cependant leur lot de contraintes qui font partie des éléments à maîtriser : les capacités thermiques installées, la température maximale mécano-thermique de fonctionnement des équipements et sous-équipements, etc.

Les différents fours ou même les différents équipements et sous-équipements comme les brûleurs ou les tubes radiants font appel à diverses variantes dans les instruments de mesure : thermocouple, thermocouple de régulation, etc. qui peuvent être montés physiquement à des endroits dépendant des préférences d'engineering. Quant à la mesure de température du produit final, elle se fait généralement par pyrométrie. Plusieurs techniques de montage font partie de l'état de l'art. La visualisation du comportement du four à travers ces variantes d'instruments fait partie du travail de contrôle des fours afin d'atteindre les qualités visées. Un autre aspect de la présente invention est d'inclure des méthodes d'auto-apprentissage qui estiment en ligne des valeurs de paramètres intrinsèques dudit four.

Le transport de bande à travers le four est un point crucial, surtout pour les fours verticaux qui font appel à des rouleaux déflecteurs. En effet, ceux-ci induisent une composante supplémentaire d'échanges de chaleur et ont en outre un profil qui permet le centrage du produit sur son axe de défilement lors de son transport sur la ligne de production et plus particulièrement dans le four. Les rouleaux se déformant en fonction de la température, l'auto-centrage peut être perturbé et avoir des conséquences majeures pour la production. Une modification du profil des rouleaux peut mener à une « simple » détérioration du matériau par froissage (heat buckle), ou à un simple arrêt de la ligne suite à un déport de bande (meandering), mais également à une cassure de bande avec des dégâts collatéraux induisant plusieurs heures et même parfois plusieurs jours d'arrêt de production.

De préférence, des actions temporaires sur un dispositif rapide pour faire varier la température d'un produit métallique permettent de sécuriser au plus rapidement les points de fonctionnement des équipements liés à des risques de plis de bande et/ou de déport de bande.

### Gestion de transitoires

Un autre désavantage de l'état de la technique que la présente invention propose de résoudre concerne la détermination des consignes vers les dispositifs constitutifs du four pour faire varier la température d'un produit. Déterminer des consignes d'un four en état stationnaire, c'est-à-dire ayant des points de fonctionnement stables, ne suffit pas car les utilisateurs des fours pour le traitement des produits retrouvent à travers leurs carnets de commandes une forte variabilité de plusieurs paramètres :
- changement de type de produit, typiquement de type d'alliage,
- changement de dimension de produit: largeur, épaisseur,
- changement de cycle, c'est-à-dire changement de la/des température/s de produit visée/s et optionnellement du profil de température à respecter,
- objectifs de limites de qualité sur le cycle, parfois étroits,
- changement de vitesse de production cible.

Pour chaque produit, un jeu de consignes spécifiques est déterminé, qui implique de produit en produit des changements récurrents des points de fonctionnement et donc du profil de température de bande tout au long du four. Ces situations de changements récurrents sont le quotidien de beaucoup de producteurs. Les transitions en enfilade aboutissent parfois à des situations irréalistes menant à ce qu'une portion du produit soit hors des plages de température cibles (limites de qualité) imposées.

Préférentiellement, une propriété d'inertie thermique est définie par l'effet de longueur de bande dans un four avec une développée de bande, qui peut mener à des retards géographiques, ces retards conjoints aux inerties du four sont plus ou moins importants notamment en fonction de la vitesse de défilement, de l'épaisseur, de la largeur et/ou de la capacité calorifique du produit.

De préférence, une propriété d'inertie thermique est un retard géographique dû au transport de produit dans le four. Un retard géographique dans le four est dû au fait que toute action sur le four, se verra appliquée à plusieurs ou tous les segments de produit présents. Chaque segment se verra affligé des nouvelles conditions pendant une durée dépendant de sa position dans le four. En conséquence, pendant la production, chaque segment sortant du four montrera un résultat, par exemple une température de bande, changeant avec retard puis généralement changeant continuellement jusqu'à ce que le nouveau point de fonctionnement soit atteint. L'action appliquée sur le four se présentera comme un retard et/ou une inertie thermique, mais dont l'origine est géographique et liée au transport de produit. Cette inertie thermique combinée au processus thermique se présente comme non linéaire et complexe.

Un four équipé de dispositifs lents pour faire varier la température d'un produit et de dispositifs rapides pour faire varier la température d'un produit selon l'invention permet lors d'une modification de la vitesse de défilement de bande, d'induire par le biais de l'unité de contrôle, une modification de la consigne de four sur un dispositif rapide pour faire varier la température d'un produit afin de compenser le plus rapidement possible la perturbation induite par le changement de vitesse de défilement. Par exemple, un dispositif rapide pour faire varier la température d'un produit permet de compenser très rapidement la perturbation induite par le changement de vitesse de défilement. L'unité de contrôle est par la suite configurée pour transférer des charges d'un élément de chauffe rapide à un autre élément de chauffe (lent), par exemple des tubes radiants, en prenant en compte lors du transfert de la consigne de chauffe, des propriétés d'inertie thermique concernant en particulier lesdits tubes radiants, les rouleaux ou les parois du four et tout autre propriété d'inertie thermique intrinsèque d'un élément constitutif du four.

Une perturbation et/ou un écart sur les caractéristiques de bande ou de propriétés de produit connues à l'avance ou détectées en ligne, par exemple la variation de la qualité de l'acier, est compensée par le four selon l'invention en induisant une action sur un dispositif rapide pour faire varier la température d'un produit, en compensation de la variation de produit. Par exemple une propriété de bande connue par avance ou détectée en ligne (par exemple mais pas de façon limitative en amont du four) ayant pour conséquence, le besoin d'une moindre quantité de chaleur pour un même objectif de qualité est compensée par une consigne vers un dispositif rapide pour faire varier la température d'un produit afin de compenser une telle variation au plus tôt. Par exemple et de façon imagée, un « dos de dromadaire » de caractéristique(s) d'un produit, c'est-à-dire une variation de caractéristique(s) évoluant tout au long d'un produit pour revenir en fin de produit à un niveau équivalent de celui du début du produit et formant une bosse, est compensée par une consigne prenant en compte les propriétés d'inertie thermique du four de façon à apporter une correction de traitement thermique avec effet inverse audit « dos de dromadaire ». D'autres profils de caractéristiques peuvent se présenter comme un profil en S vu à horizontal ou un profil continué dans une direction. Ce profil continué réclamera un changement de consigne particulièrement rapide en fin de produit et/ou en début de produit suivant.

Toute perturbation et/ou écart sur les caractéristiques de produit ou de propriété de produit connu ou détecté en ligne et nécessitant une modification d'une température de bande cible et/ou d'un point de fonctionnement du four, peut induire selon l'invention, une action sur un dispositif rapide pour faire varier la température d'un produit, en compensation d'une variation lente d'un dispositif lent pour faire varier la température d'un produit, dont un nouveau point de fonctionnement aura été déterminé. Ainsi l'unité de contrôle définit des nouvelles consignes de four qui varient dans le temps en prenant en compte notamment les propriétés d'inertie thermique des éléments constitutifs du four ayant une inertie thermique. Ainsi le dispositif rapide pour faire varier la température d'un produit grâce à la consigne envoyée par l'unité de contrôle permet d'assurer la transition jusqu'à ce que le nouveau point de fonctionnement défini par la modification de propriété du produit détectée soit atteinte essentiellement grâce aux tubes de chauffage radiants. De préférence le nouveau point de fonctionnement est essentiellement atteint par les dispositifs pour faire varier la température d'un produit constitutif du four, y compris le dispositif lent pour faire varier la température d'un produit, par exemple un élément de chauffe ou dispositif lent pour faire varier la température d'un produit faisant appel à des tubes de chauffage radiant.

Lors d'une modification d'un paramètre d'un produit nécessitant un point de fonctionnement différent alors en place du four, la prise en compte des propriétés d'inertie thermique par l'unité de contrôle permet dans un premier temps l'envoi d'une consigne vers un dispositif rapide pour faire varier la température d'un produit, afin d'atteindre le plus rapidement possible les objectifs de qualité cible (par exemple définis par une température de bande cible). Dans un deuxième temps ou de façon simultanée, l'unité de contrôle détermine une nouvelle consigne du dispositif lent pour faire varier la température d'un produit afin d'atteindre un point de fonctionnement du four permettant d'atteindre la température de bande cible. La prise en compte des propriétés d'inertie thermique est alors indispensable pour atteindre le plus rapidement possible la nouvelle température de bande cible tout en amenant le four à un nouveau point de fonctionnement. Ceci est particulièrement avantageux pour une meilleure gestion des transitoires. Une meilleure gestion des transitoires est obtenue lorsque le temps mis pour passer d'un premier point de fonctionnement vers un deuxième point de fonctionnement visant par exemple un changement de température de bande cible d'un deuxième produit, exécuté sur une portion d'un produit ou de l'autre produit ou partagé entre les deux produits est réduit par rapport à une gestion des transitoire classique ne prenant pas en compte les propriétés d'inertie thermique. La combinaison de la prise en compte des propriétés d'inertie thermiqueet d'un dispositif rapide pour faire varier la température d'un produit est particulièrement avantageuse dans le but d'obtenir une meilleure gestion des transitoires.

Dans le four selon les modes de réalisation précédemment énoncés, des actions temporaires sur un dispositif rapide pour faire varier la température d'un produit ont pour but de compenser les réactions lentes d'un dispositif lent pendant les transitoires. La compensation juste des réactions lentes d'un dispositif lent pour faire varier la température d'un produit par un dispositif rapide est notamment possible grâce à la prise en compte des propriétés d'inertie thermique par l'unité de contrôle. La prise en compte des propriétés d'inertie thermique est particulièrement avantageuse par rapport à une simple modélisation de l'échange de la source de chaleur vers le produit la prise en compte des propriétés d'inertie thermique des éléments constitutifs du four ayant une grande inertie thermique est difficilement modélisable. Par exemple, l'historique de traitement correspondant essentiellement aux paramètres de chauffe des éléments du four ayant une inertie thermique est très difficile à appréhender lors d'une telle modélisation simple.

Dans le four selon les modes de réalisation précédemment énoncés, le dispositif rapide pour faire varier la température d'un produit a pour but de minimiser les temps et/ou longueurs de produit couvrant les transitoires pour lesquels la température de bande cible n'est pas atteinte ou pour lesquels il n'est pas possible d'en garantir la bonne qualité. Cette minimisation est préférablement obtenue par l'envoi d'une nouvelle consigne vers un dispositif lent pour faire varier la température d'un produit en combinaison avec une consigne temporaire ou plus prolongée et éventuellement adaptée dans le temps vers le dispositif rapide pour faire varier la température d'un produit.

Dans le four selon les modes de réalisation précédemment énoncés, le fait que des actions (consignes) temporaires sur le dispositif rapide pour faire varier la température d'un produit aient pour but de modifier rapidement les points de fonctionnement de l'installation, permet de préparer rapidement le four à un nouveau régime de fonctionnement décidé à la volée, c'est-à-dire sans planification particulière au préalable. Ceci est particulièrement avantageux lors de changement de point de fonctionnement énergétique, ou de changement de planification produits dans des temps relativement courts.

Dans le four selon les modes de réalisation précédemment énoncés, des actions temporaires sur le dispositif rapide pour faire varier la température d'un produit ont pour but de sécuriser au plus rapidement les points de fonctionnement des équipements liés à des risques de plis de bande et/ou de déport (meandering) de bande. Ainsi une consigne temporaire vers le dispositif rapide pour faire varier la température d'un produit permet de limiter les risques liés aux plis de bande et/ou déports de bande lors de changements. Une consigne vers un dispositif rapide pour faire varier la température d'un produit peut lorsqu'il existe un risque important de plis ou de déport de bande lors d'un transitoire, lors d'un changement dans la production ou la conduite de la production, ou simplement lors d'une utilisation normale dû à une modification des paramètres ou propriétés de produit, permettre un meilleur centrage de bande sur son axe de transport et/ou d'éviter des plis de bande.

Dans le four selon les modes de réalisation précédemment énoncés, des actions temporaires sur le dispositif rapide pour faire varier la température d'un produit ont pour but de gérer transitoirement les points de fonctionnement des équipements afin de limiter les risques de plis de bande et/ou de déport de bande, le temps que le dispositif lent pour faire varier la température d'un produit s'établisse sur son régime.

Dans le four selon les modes de réalisation précédemment énoncés, des actions temporaires sur le guidage du produit peut transformer le produit en élément de four équivalent à un dispositif rapide pour faire varier la température de rouleau et permettre de modifier dynamiquement le profil du/des rouleaux de four. En effet, il peut être intéressant de modifier dynamiquement le profil d'un (ou de plusieurs) rouleau(x) en prévision d'un transitoire. Le déport de la bande sur un rouleau, c'est-à-dire le fait de dévier la bande de la partie centrale vers les bords de rouleaux permet d'en modifier le profil. Par exemple les bords de rouleaux sont souvent en chauffe plus chauds que la partie centrale de rouleau bien que des déflecteurs existent pour en limiter la surchauffe, et en refroidissement, les bords des rouleaux sont souvent plus froids. Ce phénomène est courant et non gênant pour permettre un bon guidage de la bande mais peut se révéler gênant lors d'un transitoire. Ainsi le fait de faire passer la bande sur les bords de rouleaux permet souvent d'en changer la température tout en restant dans des températures de bande assurant la bonne qualité du traitement thermique.

Dans le four selon les modes de réalisation précédemment énoncés, il est avantageux pour modifier un profil de rouleau, par exemple en chauffe équipé d'un dispositif rapide pour faire varier la température d'un produit positionné en amont dans une zone avec pas ou peu de rouleaux, les rouleaux eux-mêmes positionnés dans une zone de four lente, c'est à dire équipée de dispositifs lents pour faire varier la température d'un produit d'envoyer une consigne de chauffe moindre aux dispositifs lent et d'envoyer une consigne de chauffe plus importante vers le dispositif rapide. Par exemple dans le cas d'un dispositif rapide par induction, celui-ci ne chauffe que la bande et ne chauffe donc pas le bord des rouleaux comme le ferait un dispositif lent.

L'invention permet avantageusement une meilleure gestion du four et notamment la gestion de transitoires dans le but de prévenir les risques de déport de bande et de formation de plis de bande. La prise en compte des propriétés d'inertie thermique du four permet la prévention de ces risques notamment en modifiant en temps opportun les consignes de four tout en évitant d'atteindre des points de fonctionnement dangereux. Un contrôle ne prenant pas en compte ces propriétés d'inertie thermique du four ne permettrait pas une telle efficacité dans la prévention de ces risques en limitant la probabilité d'atteindre rapidement des points de fonctionnement dangereux.

Selon un autre aspect, l'invention se rapporte à une gestion de transitoire sur augmentation de largeur de bande. Une technique de gestion, permet, de façon prédictive et dynamique, de guider la bande hors axe de défilement, d'un côté, puis de l'autre. Le but étant de refroidir les rouleaux latéralement et de minimiser les risques en cas de variation de largeur.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- la Fig.1 montre un mode de réalisation schématique particulier du four selon l'invention ;
- la Fig.2 montre un mode de réalisation schématique particulier du four selon l'invention ;
- la Fig.3 montre un mode de réalisation schématique particulier du four selon l'invention ;
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

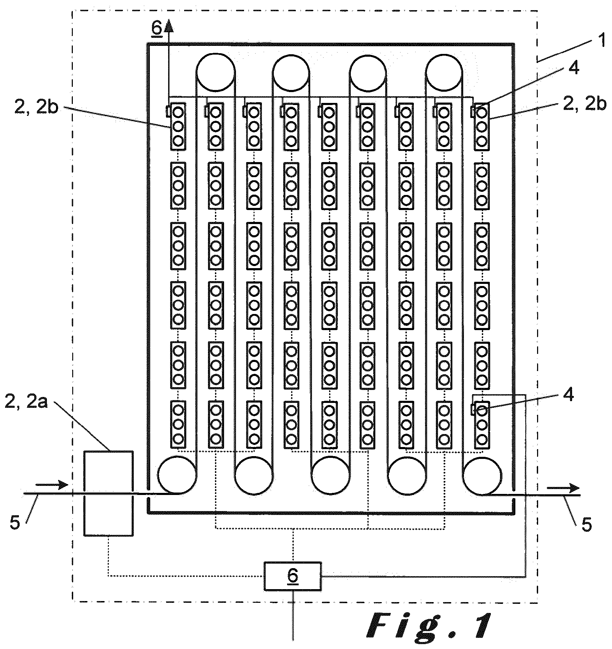

La figure 1 montre un four 1 pour la réalisation de traitement thermique d'un produit sous forme d'une bande 5. Le four 1 comprend un élément de chauffe 2 rapide 2a. L'élément de chauffe 2 rapide 2a est de préférence un élément de chauffe 2 par induction dans lequel le produit 5 peut passer afin d'être relativement rapidement monté en température. Le four 1 comprend également un élément de chauffe 2 lent 2b, un système de chauffage par tubes radiants dans le mode de réalisation présenté. Les éléments de chauffage 2 par tubes radiants sont considérés comme lents par rapport à un élément de chauffe 2 par induction car le chauffage par tubes radiants est relativement lent à réagir lors d'un changement de la puissance de chauffe souhaitée de par les inerties thermiques en jeu, au contraire de l'élément de chauffe 2 rapide 2a, qui permet une modification réputée instantanée de la puissance de chauffe fournie au produit en défilement.

Un dispositif pour faire varier la température d'un produit 2 lent 2b, par exemple par tubes radiants comme présenté dans le mode de réalisation de la figure 1 comprend une pluralité de tubes radiants 2b disposés le long du parcours du produit 5 dans le four 1. Dans le mode de réalisation présenté, ces tubes radiants 2b sont pour certains d'entre eux ou pour tous dans un cas non illustré, équipés d'au moins un capteur de température 4. Les températures des tubes radiants peuvent être de surface et/ou dans la masse d'un tube et/ou dans le flux de flamme et/ou dans le flux du produit de combustion. De même que pour d'autres éléments du four 1, les températures peuvent être de surface et/ou dans la matière, à une certaine profondeur. Un cas extrême est le cas où la température d'un/des tubes n'est pas mesurée mais provient d'un capteur virtuel et donc calculée. De préférence un capteur de température 4 physique pour tubes radiants est un thermocouple permettant une mesure dans une plage de température correspondant à la température du tube radiant en fonctionnement ou à l'arrêt. Les fours 1 ou leurs sous-équipements étant souvent équipés de système de contrôle et/ou de mise en sécurité permettant de ne pas dépasser une température au-delà de laquelle les équipements comme les tubes radiant subissent une détérioration accélérée ou une température au-delà de laquelle un fluage accéléré des matériaux se met en place, nécessitant alors des remplacements prématurés d'équipements.

Dans un mode de réalisation de l'invention, les capteurs 4 physiques ou virtuels des tubes radiants sont reliés à une unité de contrôle 6. Par exemple tous les tubes radiants sont équipés de capteurs 4 permettant à l'unité de contrôle de connaître une température des tubes radiants. Par exemple une partie des tubes radiants sont équipés de capteurs 4, l'autre partie des tubes radiants ne sont pas équipés de capteurs 4, mais l'information est suffisante pour permettre à l'unité de contrôle de déterminer la température de tous les tubes radiants par calcul.

Les dispositifs 2 pour faire varier la température d'un produit métallique 5 dans le four 1 sont reliés à l'unité de contrôle 6. L'unité de contrôle 6 permet un contrôle du transfert de chaleur des dispositifs 2 pour faire varier la température d'un produit métallique 5 et de sa gestion temporelle de chauffe. L'unité de contrôle 6, permet de gérer le contrôle (consignes de chauffe) en prenant en compte une ou plusieurs températures d'éléments constitutifs du four 1 ayant une grande inertie thermique. Cela permet d'avoir un four 1 avec une meilleure gestion globale des paramètres ou consignes de chauffe.

Des exemples de propriété d'inertie thermique utilisée pour le contrôle sont par exemple : une masse d'un rouleau 7, une masse de plusieurs rouleaux 7, une masse d'une paroi 8, une masse de plusieurs parois 8, une masse d'un tube de chauffage radiant 2b, une masse de plusieurs tubes de chauffage radiants 2b.

Dans un mode de réalisation préféré de l'invention, les dispositifs rapide 2a et lent 2b pour faire varier la température sont contrôlés par l'unité de contrôle 6 en symbiose. Par exemple, le dispositif 2 rapide 2a est utilisé pour le préchauffage du produit 5 avant d'être chauffé par le dispositif 2 lent 2b (tubes de chauffage radiants).

La présente invention permet une répartition des charges (consignes de chauffe) entre le dispositif 2 rapide 2a et le dispositif 2 lent 2b pour minimiser des problèmes en production sur les produits 5, comme les plis ou les déports de bande.

La figure 1 montre un élément de chauffe 2 rapide 2a situé en amont de plusieurs dispositifs pour faire varier la température d'un produit métallique 2 lents 2b ou tube de chauffage radiants 2b. Un dispositif pour faire varier la température d'un produit métallique 5 peut également définir plusieurs dispositifs 2 pour faire varier la température d'un produit métallique 5. Par exemple, un dispositif 2 peut être constitué de plusieurs dispositifs 2 placés le long du parcours de la bande 5 dans le four 1. En général, un four 1 est divisé en sections, dont une ou des sections de chauffe, chaque section pouvant être divisée en zones, les zones pouvant grouper des tubes radiants 2b. Un cas extrême de la découpe est que chaque tube radiant 2b est une zone. La notion de amont est notamment indiquée par le sens de défilement du produit 5. Les tubes de chauffage radiant 2b sont positionnés en aval d'un dispositif de chauffage par induction 2a dans le mode de réalisation présenté.

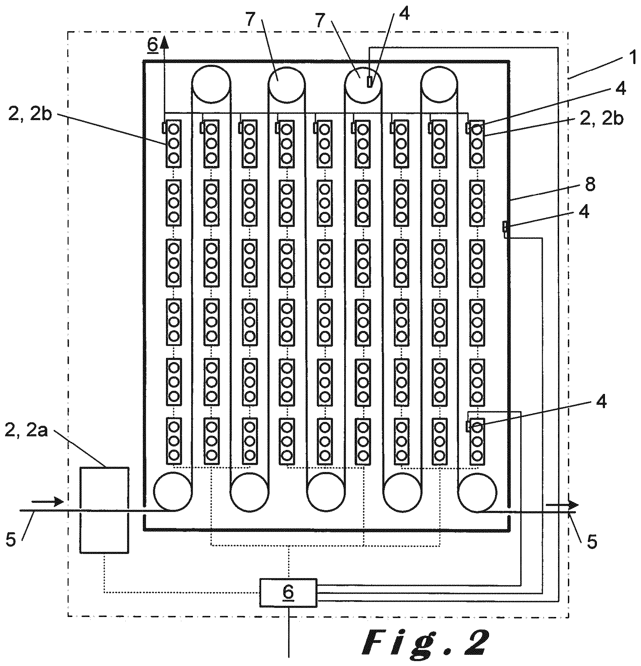

La Figure 2 montre un four 1 comprenant des capteurs 4 de température permettant de déterminer des températures de parois 8 et des températures de rouleaux 7. Ces capteurs 4 de température sont reliés à l'unité de contrôle 6. Des valeurs de température peuvent aussi être déterminées par calcul ou par modélisation dans l'unité de contrôle 6. Les valeurs de température sont prises en compte avec les caractéristiques thermiques (la capacité calorifique) des rouleaux 7 et/ou des parois 8 permettent la détermination d'au moins une propriété d'inertie thermique. En fonction des propriétés d'inertie thermique relatifs aux dispositifs 2 lents 2b, en particulier des tubes de chauffage radiant 2b, relatif aux parois 8 et relatif aux rouleaux 7, l'unité de contrôle 6 envoie une consigne vers des dispositifs de chauffe 2 rapide 2a et/ou aux dispositifs de chauffe 2 lents 2b. Cela permet une bonne prise en compte des propriétés d'inertie thermique notamment lors de modifications de points de fonctionnement et en particulier lors de transitoires, lors d'identification de risque de déport de bande ou de plis de bande 5.

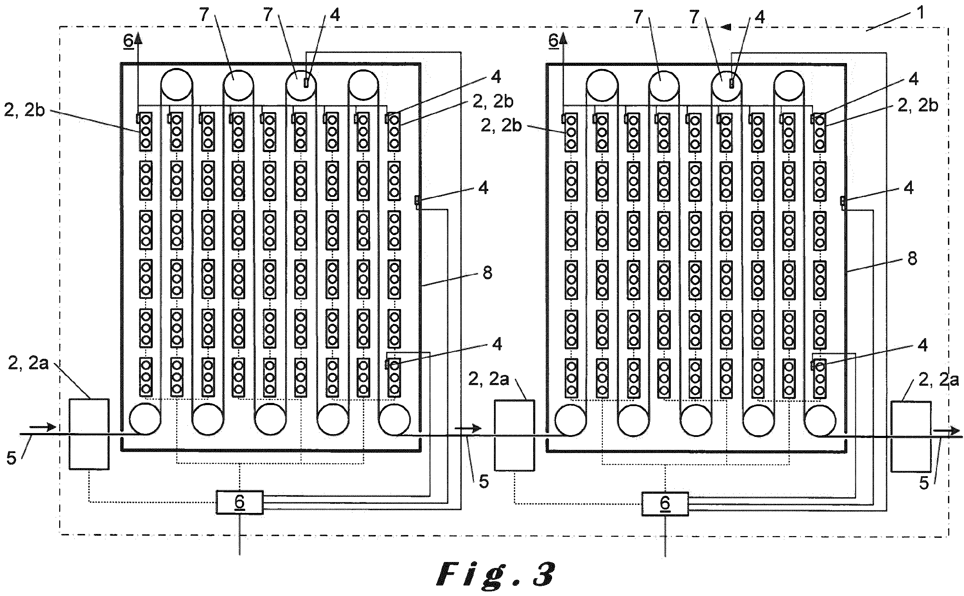

La Figure 3 montre un four 1 comprenant deux fois le four 1 montré en Figure 2 mis, en terme de produit traversant l'équipement, bout à bout et avec un dispositif de chauffage 2 rapide 2a positionné en amont de chaque four ou en aval. Cette configuration montre que la position des dispositifs 2 rapide 2a pour faire varier la température d'un produit métallique 5 est modifiable par rapport aux dispositifs 2 classiques/lents 2b. En fonction du but recherché, un dispositif 2 rapide 2a est positionné en amont d'une série de dispositifs 2 lents 2b ou de façon intercalée ou encore en aval. Le nombre de dispositifs 2 rapides 2a et/ou lents 2b ainsi que leur position ne devrait pas être limité à ce qui est représenté en Figure 3. Le four 1 peut être divisé en plusieurs zones, chaque zone peut être contrôlée par une unité de contrôle 6 différente ou par une même unité de contrôle 6. Les propriétés d'inertie thermique peuvent être déterminés et pris en compte par zone de four 1 ou pris en compte dans la gestion globale du four 1.

### Plis

"Plis" ou "Plis de chauffe et "Heat Buckling" en anglais définissent les plis de bande pouvant être observés lors du défilement d'une bande dans un four 1. Les rouleaux 7 de transport / déflecteurs ne sont généralement pas plats, mais ont un profil, dont le but principal est d'assurer l'auto-centrage du produit métallique 5. Typiquement, en four vertical à passes multiples, le profil de chaque rouleau 7 est déterminé en fonction du profil de température de bande dans le four 1. Un profil de rouleau 7 est conçu pour créer des forces d'auto-centrage et donc des contraintes, qui se transforment en contraintes internes dans la bande 5. Ces forces dépendent principalement des profils de rouleaux 7, de la tension appliquée sur la bande 5 pendant son transport et de la largeur de bande.
Si les contraintes créées dans la bande 5 sont supérieures à la contrainte maximale supportable par la bande 5, contrainte critique, il y a un risque de déformation plastique de la bande 5 et de détériorer au final le produit 5. Cette déformation de la bande 5 correspond aux plis de bande mentionnés plus tôt. Parfois les plis se limitent à des légers de plis, appelés amorces de plis. La conduite de la ligne peut aller jusqu'à un arrêt de production pour remise en régime acceptable ou dans le pire des cas, un accrochage des bandes froissées aux équipements en place dans le four 1, menant à un déchirement et une cassure de bande avec dégâts collatéraux. Dans ce dernier cas, il s'en suit un arrêt de production de plusieurs heures à plusieurs jours.

Le profil de température de bande évolue dans le four 1. La propriété de résistance mécanique des bandes diminue avec la température. Lors de la conception d'un four 1, le profil des rouleaux 7 est adapté tout au long du four 1, pour aider au guidage, tout en s'éloignant des conditions critiques de risques de plis. Il faut éviter plus particulièrement certains régimes qui donnent lieu à une montée rapide de température de bande sur des rouleaux 7 à fort profil.

Dans un four 1, avec des équipements déterminés comme des rouleaux 7 et leur profil, les facteurs contrôlables comme la tension de bande et/ou le profil de température de bande le long du four peuvent être ajustés. Par exemple, dans un four à rouleaux 7 déflecteurs, les premiers rouleaux 7 de la chauffe ont les profils plus accentués et engendrent le plus de contraintes internes dans la bande 5. Sur des bandes à risque de plis, il y a un avantage évident dans de telles conditions à minimiser l'apport de calories en début du processus de chauffe, en répartissant les puissances par une diminution de l'apport de puissance fait en début de four 1, par une répartition entre différents dispositifs 2, 2a, 2b pour faire varier la température d'un produit métallique 5 dans ledit four 1.

Lors de changements de produits (transitoire), le régime de fonctionnement de l'installation est adapté. Il y a un intérêt à changer au plus rapidement le point de fonctionnement de l'installation, pour garder des régimes de fonctionnement les plus constants le long des bobines. Par exemple, cela peut se faire en changeant rapidement/immédiatement le point de fonctionnement du dispositif 2 rapide 2a (inducteur) pour faire varier la température d'un produit métallique 5, plus particulièrement avant le point transition, afin de garder chaque produit hors des régimes de formation de plis.

Lors de changement de vitesse de défilement de bande, plus particulièrement lors de diminution rapide de vitesse, le point de fonctionnement du four classique/faisant parti de l'état de la technique, est tel que le produit traité peut se trouver dans un régime à formation de plis. Il y a avantageusement intérêt à changer rapidement le régime de fonctionnement du dispositif 2 rapide 2a (inducteur), pour laisser entrer dans le four 1 une bande 5 (plus) froide, et éviter un échauffement de bande qui pourrait être fatal au-delà des valeurs critiques.

En cas changement de régime de production, il y a un intérêt à préparer le four 1 vers un point de fonctionnement adapté au point le moins critique de deux bobines, et/ou de s'éloigner transitoirement, c'est à dire pendant la phase transitoire de points de fonctionnement dangereux.

### Guidage de bande

On parle de guidage, pour désigner le centrage de bande 5 dans l'axe de la ligne. Le jargon utilise "meandering" pour désigner les instabilités dans le centrage de bande 5, qui sont en première approche limitées par une diminution de la vitesse de production et engendre une perte de productivité. Mais la déviation de bande peut être telle que la bande 5 touche les parois 8 ou autres équipements et endommage le four 1, provoquant dégâts matériel et/ou arrêt de production.

Le profil des rouleaux 7 d'un four 1 est un compromis entre les risques de plis et l'auto-centrage de bande 5. Des profils de rouleaux 7 faibles seront bénéfiques pour minimiser les risques de plis, mais diminuent les forces de centrage. Dans le cas de lignes couvrant la production de produits de dimension et de qualité variées, le compromis entre les risques de plis et de guidage de bande 5 est recherché.

En cas de risque de guidage de bande 5, il y a un intérêt à chauffer la bande 5 au plus tôt dans un four, celle-ci ayant alors une meilleure adhérence sur les rouleaux 7 et donc un meilleur centrage. L'exploitation du dispositif 2 rapide 2a, en particulier d'un inducteur sera bénéfique.

En cas de changement de régime de production, il y a un intérêt à préparer le four 1 vers un point de fonctionnement acceptable au point de vue critique de deux produits métalliques 5, et/ou de s'éloigner transitoirement / pendant la phase transitoire de points de fonctionnement dangereux. Le dispositif 2 rapide 2a, en particulier un inducteur, sera utilisé pour répartir les régimes de fonctionnement des différentes sections, afin de minimiser les risques de déport. Ceci est particulièrement vrai en cas d'augmentation de largeur de bande, ou sur des bandes étroites. La technique de la gestion liée à la problématique des risques de plis de bande est transposable à la gestion du déport de bande mutatis mutandis.

## Revendications

1. Four (1) pour le traitement thermique d'un produit métallique (5) par défilement et comprenant des éléments constitutifs ayant chacun une propriété d'inertie thermique, lesdits éléments constitutifs comprenant :
- des parois (8) délimitant au moins partiellement ledit four (1);
- une unité de chauffe (2) pour chauffer un produit métallique (5) lorsque ce dernier est au moins en partie dans ledit four (1 ) ;
- un élément de chauffe rapide (2a) pour chauffer un produit métallique (5) lorsque ce dernier est au moins en partie dans ledit four (1 ), ledit élément de chauffe rapide (2a) étant distinct de ladite une unité de chauffe (2) ;
ledit four (1) comprenant en outre :
une unité de contrôle (6) pour contrôler ladite unité de chauffe (2) et/ou l'élément de chauffe rapide (2a) sur la base d'une ou plusieurs propriétés d'inertie thermique d'un ou plusieurs éléments constitutifs dudit four (1) provenant d'un capteur physique ou virtuel, et au moins sur la base d'une masse d'un élément constitutif dudit four (1) ;
ladite unité de contrôle (6) étant en outre configurée pour contrôler une vitesse de défilement d'un produit métallique (5) dans ledit four (1) sur la base d'une ou plusieurs propriétés d'inertie thermique d'un ou plusieurs éléments constitutifs dudit four (1) provenant d'un capteur physique ou virtuel.

2. Four (1) selon la revendication précédente **caractérisé en ce que** l'une ou plusieurs propriétés d'inertie thermique comprend une masse, et/ou une température, et/ou une chaleur spécifique.

3. Four (1) selon l'une quelconque des revendications précédentes **caractérisé en ce que** ladite unité de contrôle (6) est apte à contrôler ladite unité de chauffe (2) et/ou l'élément de chauffe rapide (2a) sur la base d'une température d'un élément constitutif dudit four (1) et/ou sur la base d'une capacité thermique massique d'un élément constitutif dudit four (1).

4. Four (1) selon l'une quelconque des revendications précédentes **caractérisé en ce que** lesdits éléments constitutifs comprennent en outre un ou plusieurs rouleaux (7) pour transporter et/ou guider ledit produit métallique (5) dans ledit four (1) et **en ce que** ladite unité de contrôle (6) est apte à contrôler ladite unité de chauffe (2) et/ou l'élément de chauffe rapide (2a) sur la base d'une ou plusieurs propriétés d'inertie thermique d'un ou plusieurs rouleaux (7) et de préférence, sur la base d'une ou plusieurs températures d'un ou plusieurs rouleaux (7).

5. Four (1) selon l'une quelconque des revendications précédentes **caractérisé en ce que** ladite unité de contrôle (6) est apte à contrôler ladite unité de chauffe (2) et/ou l'élément de chauffe rapide (2a) sur la base d'une propriété d'inertie thermique d'une paroi (8).

6. Four (1) selon l'une quelconque des revendications précédentes **caractérisé en ce que** ledit élément de chauffe rapide (2a) est un élément de chauffe par induction (2a) pour faire varier la température par induction d'un produit métallique (5).

7. Four (1) selon l'une quelconque des revendications précédentes **caractérisé en ce que** les parois (8) sont en outre **caractérisées par** des températures de parois, des épaisseurs de parois et des capacités calorifiques de parois,
et **en ce que** l'unité de contrôle (6) est apte à contrôler ladite au moins une unité de chauffe (2) et/ou ledit élément de chauffe rapide (2a) sur base :
- de températures des parois (8),
- des épaisseurs des parois (8), et
- de capacités calorifiques de parois (8).

8. Four (1) selon l'une quelconque des revendications précédentes **caractérisé en ce que** ladite unité de chauffe (2) comprend un tube de chauffage radiant (2b) ayant une propriété d'inertie thermique déterminée à partir d'une température de tube de chauffage radiant (2b) et/ou d'une capacité calorifique de tube de chauffage radiant (2b) et/ou d'une épaisseur de tube de chauffage radiant (2b).

9. Four (1) selon la revendication précédente **caractérisé en ce que** ladite unité de contrôle (6) est en outre configurée pour contrôler ladite au moins une unité de chauffe (2), ou ledit élément de chauffe rapide (2a), ou ledit tube de chauffage radiant (2b) sur la base d'une propriété d'un produit métallique (5) configuré pour défiler dans ledit four (1).

10. Four (1) selon l'une quelconque des revendications précédentes comprenant :
- une première portion pour faire varier la température d'un produit métallique (5) comprenant au moins une unité de chauffe (2) ou un élément de chauffe rapide (2a), et,
- une deuxième portion pour maintenir la température d'un produit métallique (5) comprenant au moins une unité de chauffe (2) ou un élément de chauffe rapide (2a),
**caractérisé en ce que** ladite unité de contrôle (6) est apte à :
- contrôler ladite unité de chauffe (2) ou ledit élément de chauffe rapide (2a) de ladite première portion pour faire varier la température d'un produit métallique (5), et,
- contrôler ladite unité de chauffe (2) ou ledit élément de chauffe rapide (2a) de ladite deuxième portion pour faire varier ou maintenir la température d'un produit métallique (5).

11. Four (1) selon l'une quelconque des revendications précédentes comprenant en outre des moyens de détermination (4) aptes à déterminer au moins un paramètre physique pour déterminer une ou plusieurs propriété d'inertie thermique d'un ou plusieurs éléments constitutifs du four (1).

12. Procédé de contrôle en température d'un produit métallique (5) dans un four (1) pour le traitement thermique dudit produit métallique (5),
- ledit four (1) comprenant des éléments constitutifs ayant chacun une propriété d'inertie thermique, lesdits éléments constitutifs comprenant :
∘ des parois (8) délimitant au moins partiellement ledit four (1);
∘ au moins une unité de chauffe (2) pour chauffer un produit métallique (5) lorsque ce dernier est au moins en partie dans ledit four (1 ) ;
∘ un élément de chauffe rapide (2a) pour chauffer un produit métallique (5) lorsque ce dernier est au moins en partie dans ledit four (1 ), ledit élément de chauffe rapide (2a) étant distinct de ladite unité de chauffe (2) ;
- ledit four (1) comprenant en outre :
∘ une unité de contrôle (6) pour contrôler ladite au moins une unité de chauffe (2) et/ou l'élément de chauffe rapide (2a), ladite unité de contrôle (6) étant en outre configurée pour contrôler une vitesse de défilement d'un produit métallique (5) dans ledit four (1) ;
- ledit procédé comprenant les étapes suivantes :
a) déterminer une ou plusieurs propriétés d'inertie thermique d'un ou plusieurs éléments constitutifs dudit four (1), une propriété d'inertie thermique d'un élément constitutif dudit four (1) étant au moins une masse d'un élément constitutif dudit four (1) ;
b) fournir à l'unité de contrôle (6) lesdites une ou plusieurs propriétés d'inertie thermique d'un ou plusieurs éléments constitutifs dudit four (1), dont une propriété d'inertie thermique d'un élément constitutif dudit four (1) étant au moins une masse d'un élément constitutif dudit four (1), déterminées à l'étape précédente ;
c) contrôler avec l'unité de contrôle (6) :
∘ ladite au moins une unité de chauffe (2) et/ou l'élément de chauffe rapide (2a) sur la base d'une ou plusieurs propriétés d'inertie thermique d'un ou plusieurs éléments constitutifs dudit four (1) provenant d'un capteur physique ou virtuel, et au moins sur la base d'une masse d'un élément constitutif dudit four (1) déterminé à l'étape a) et fournie à l'étape b) ;
∘ ladite vitesse de défilement d'un produit métallique (5) dans ledit four (1) sur la base d'une ou plusieurs propriétés d'inertie thermique d'un ou plusieurs éléments constitutifs du four (1) provenant d'un capteur physique ou virtuel.

13. Procédé selon la revendication précédente **caractérisé en ce que** l'une ou plusieurs propriétés d'inertie thermique comprend une masse, et/ou une température, et/ou une chaleur spécifique.

14. Procédé selon la revendication 12 ou 13 **caractérisé en ce que** ladite unité de contrôle (6) est apte à contrôler ladite unité de chauffe (2) et/ou l'élément de chauffe rapide (2a) sur la base d'une température d'un élément constitutif dudit four (1) et/ou sur la base d'une capacité thermique massique d'un élément constitutif dudit four (1), et **en ce que**,
- l'étape a) comprend en outre la détermination d'une température d'un élément constitutif dudit four (1) et/ou d'une capacité thermique massique d'un élément constitutif dudit four (1),
- l'étape b) comprend en outre de fournir une température d'un élément constitutif dudit four (1) et/ou d'une capacité thermique massique d'un élément constitutif dudit four (1),
- l'étape c) comprend en outre le contrôle de ladite unité de chauffe (2) et/ou l'élément de chauffe rapide (2a) sur la base d'une température d'un élément constitutif dudit four (1) et/ou sur la base d'une capacité thermique massique d'un élément constitutif dudit four (1).

15. Procédé selon l'une quelconque des revendications 12 à 14 **caractérisé en ce que** ledit four (1) comprend en outre :
- des rouleaux (7) pour transporter et/ou guider ledit produit métallique (5) dans ledit four (1), et **en ce que** :
- l'étape a) comprend en outre la détermination d'une ou plusieurs propriétés d'inertie thermique d'un ou plusieurs rouleaux (7) ;
- l'étape b) comprend en outre de fournir à l'unité de contrôle une ou plusieurs propriétés d'inertie thermique d'un ou plusieurs rouleaux (7) ;
- l'étape c) comprend en outre le contrôle sur la base d'une ou plusieurs propriétés d'inertie thermique d'un ou plusieurs rouleaux (7).

16. Procédé selon l'une quelconque des revendications 12 à 15 **caractérisé en ce que**
- l'étape a) comprend en outre la détermination d'une propriété d'inertie thermique d'une paroi (8) ;
- l'étape b) comprend en outre de fournir à l'unité de contrôle d'une propriété d'inertie thermique d'une paroi (8) ;
- l'étape c) comprend en outre le contrôle sur la base d'une propriété d'inertie thermique d'une paroi (8).

17. Procédé selon l'une quelconque des revendications 12 à 16 **caractérisé en ce que** ladite au moins une unité de chauffe (2) comprend un tube de chauffage radiant (2b), et **en ce que** l'étape c) de contrôle permet en outre de contrôler ledit tube de chauffage radiant (2b), et **en ce que**
- l'étape a) comprend en outre la détermination d'au moins une température de tube de chauffage radiant (2b) ;
- l'étape b) comprend en outre de fournir au moins une température de tube de chauffage radiant (2b) ;
- l'étape c) comprend en outre le contrôle sur la base d'au moins une température de tube de chauffage radiant (2b).

## Patentansprüche

1. Ofen (1) zur thermischen Behandlung eines Metallprodukts (5) durch Durchlauf und umfassend Bauteile, die jeweils eine Wärmeträgheitseigenschaft aufweisen, wobei die Bauteile umfassen:
- Wände (8), die den Ofen (1) mindestens teilweise begrenzen;
- eine Heizeinheit (2) zum Erhitzen eines Metallprodukts (5), wenn sich dieses Letztere mindestens teilweise im Ofen (1) befindet;
- ein Schnellheizelement (2a) zum Erhitzen eines Metallprodukts (5), wenn sich dieses Letztere mindestens teilweise im Ofen (1) befindet, wobei das Schnellheizelement (2a) verschieden von der Heizeinheit (2) ist;
wobei der Ofen (1) weiter umfasst:
eine Steuereinheit (6) zum Steuern der Heizeinheit (2) und/oder des Schnellheizelements (2a) auf der Grundlage einer oder mehrerer Wärmeträgheitseigenschaften eines oder mehrerer Bauteile des Ofens (1), die aus einem physikalischen oder virtuellen Sensor hervorgehen, und mindestens auf der Grundlage einer Masse eines Bauteils des Ofens (1);
wobei die Steuereinheit (6) weiter dazu ausgelegt ist, eine Durchlaufgeschwindigkeit eines Metallprodukts (5) im Ofen (1) auf der Grundlage einer oder mehrerer Wärmeträgheitseigenschaften eines oder mehrerer Bauteile des Ofens (1), die aus einem physikalischen oder virtuellen Sensor hervorgehen, zu steuern.

2. Ofen (1) nach dem vorstehenden Anspruch, **dadurch gekennzeichnet, dass** die eine oder mehreren Wärmeträgheitseigenschaften eine Masse und/oder eine Temperatur und/oder eine spezifische Wärme umfasst.

3. Ofen (1) nach einem der vorstehenden Ansprüche, **dadurch gekennzeichnet, dass** die Steuereinheit (6) imstande ist, die Heizeinheit (2) und/oder das Schnellheizelement (2a) auf der Grundlage einer Temperatur eines Bauteils des Ofens (1) und/oder auf der Grundlage einer spezifischen Wärmekapazität eines Bauteils des Ofens (1) zu steuern.

4. Ofen (1) nach einem der vorstehenden Ansprüche, **dadurch gekennzeichnet, dass** die Bauteile weiter eine oder mehrere Walzen (7) zum Befördern und/oder Leiten des Metallprodukts (5) im Ofen (1) umfassen und dadurch, dass die Steuereinheit (6) imstande ist, die Heizeinheit (2) und/oder das Schnellheizelement (2a) auf der Grundlage einer oder mehrerer Wärmeträgheitseigenschaften einer oder mehrerer Walzen (7) und vorzugsweise auf der Grundlage einer oder mehrerer Temperaturen einer oder mehrerer Walzen (7) zu steuern.

5. Ofen (1) nach einem der vorstehenden Ansprüche, **dadurch gekennzeichnet, dass** die Steuereinheit (6) imstande ist, die Heizeinheit (2) und/oder das Schnellheizelement (2a) auf der Grundlage einer Wärmeträgheitseigenschaft einer Wand (8) zu steuern.

6. Ofen (1) nach einem der vorstehenden Ansprüche, **dadurch gekennzeichnet, dass** das Schnellheizelement (2a) ein Induktionsheizelement (2a) ist, um die Temperatur eines Metallprodukts (5) durch Induktion variieren zu lassen.

7. Ofen (1) nach einem der vorstehenden Ansprüche, **dadurch gekennzeichnet, dass** die Wände (8) weiter durch Wandtemperaturen, Wanddicken und Wandwärmekapazitäten gekennzeichnet sind, und dadurch, dass die Steuereinheit (6) imstande ist, die mindestens eine Heizeinheit (2) und/oder das Schnellheizelement (2a) auf der Grundlage von Folgendem zu steuern:
- Temperaturen der Wände (8),
- der Dicken der Wände (8), und
- Wärmekapazitäten von Wänden (8).

8. Ofen (1) nach einem der vorstehenden Ansprüche, **dadurch gekennzeichnet, dass** die Heizeinheit (2) ein Strahlungsheizrohr (2b) umfasst, das eine Wärmeträgheitseigenschaft aufweist, die ausgehend von einer Temperatur des Strahlungsheizrohrs (2b) und/oder einer Wärmekapazität des Strahlungsheizrohrs (2b) und/oder einer Dicke des Strahlungsheizrohrs (2b) bestimmt wird.

9. **Ofen (1)** nach dem vorstehenden Anspruch, **dadurch gekennzeichnet, dass** die Steuereinheit (6) weiter dazu ausgelegt ist, die mindestens eine Heizeinheit (2) oder das Schnellheizelement (2a) oder das Strahlungsheizrohr (2b) auf der Grundlage einer Eigenschaft eines Metallprodukts (5) zu steuern, das dazu ausgelegt ist, den Ofen (1) zu durchlaufen.

10. Ofen (1) nach einem der vorstehenden Ansprüche, umfassend:
- einen ersten Abschnitt, um die Temperatur eines Metallprodukts (5) variieren zu lassen, umfassend mindestens eine Heizeinheit (2) oder ein Schnellheizelement (2a), und
- einen zweiten Abschnitt, um die Temperatur eines Metallprodukts (5) beizubehalten, umfassend mindestens eine Heizeinheit (2) oder ein Schnellheizelement (2a),
**dadurch gekennzeichnet, dass** die Steuereinheit (6) zu Folgendem imstande ist:
- Steuern der Heizeinheit (2) oder des Schnellheizelements (2a) des ersten Abschnitts, um die Temperatur eines Metallprodukts (5) variieren zu lassen, und
- Steuern der Heizeinheit (2) oder des Schnellheizelements (2a) des zweiten Abschnitts, um die Temperatur eines Metallprodukts (5) variieren zu lassen oder beizubehalten.

11. Ofen (1) nach einem der vorstehenden Ansprüche, weiter umfassend Bestimmungsmittel (4), die imstande sind, mindestens einen physikalischen Parameter zu bestimmen, um eine oder mehrere Wärmeträgheitseigenschaften eines oder mehrerer Bauteile des Ofens (1) zu bestimmen.

12. Temperatursteuerungsverfahren eines Metallprodukts (5) in einem Ofen (1) zur thermischen Behandlung des Metallprodukts (5),
- wobei der Ofen (1) Bauteile umfasst, die jeweils eine Wärmeträgheitseigenschaft aufweisen, wobei die Bauteile umfassen:
∘ Wände (8), die den Ofen (1) mindestens teilweise begrenzen;
∘ mindestens eine Heizeinheit (2) zum Heizen eines Metallprodukts (5), wenn sich dieses Letztere mindestens teilweise im Ofen (1) befindet;
o ein Schnellheizelement (2a) zum Heizen eines Metallprodukts (5), wenn sich dieses Letztere mindestens teilweise im Ofen (1) befindet, wobei das Schnellheizelement (2a) verschieden von der Heizeinheit (2) ist;
- wobei der Ofen (1) weiter umfasst:
∘ eine Steuereinheit (6) zum Steuern der mindestens einen Heizeinheit (2) und/oder des Schnellheizelements (2a), wobei die Steuereinheit (6) weiter dazu ausgelegt ist, eine Durchlaufgeschwindigkeit eines Metallprodukts (5) im Ofen (1) zu steuern;
- wobei das Verfahren die folgenden Schritte umfasst:
a) Bestimmen einer oder mehrerer Wärmeträgheitseigenschaften eines oder mehrerer Bauteile des Ofens (1), wobei eine Wärmeträgheitseigenschaft eines Bauteils des Ofens (1) mindestens eine Masse eines Bauteils des Ofens (1) ist;
b) Bereitstellen der einen oder mehreren Wärmeträgheitseigenschaften eines oder mehrerer Bauteile des Ofens (1) an die Steuereinheit (6), wobei eine Wärmeträgheitseigenschaft eines Bauteils des Ofens (1) mindestens eine Masse eines Bauteils des Ofens (1) ist, die im vorangegangenen Schritt bestimmt wurde;
c) Steuern mit der Steuereinheit (6):
o der mindestens einen Heizeinheit (2) und/oder des Schnellheizelements (2a) auf der Grundlage einer oder mehrerer Wärmeträgheitseigenschaften eines oder mehrerer Bauteile des Ofens (1), die aus einem physikalischen oder virtuellen Sensor hervorgehen, und mindestens auf der Grundlage einer Masse eines Bauteils des Ofens (1), die im Schritt a) bestimmt wurde und im Schritt b) bereitgestellt wurde;
o der Durchlaufgeschwindigkeit eines Metallprodukts (5) im Ofen (1) auf der Grundlage einer oder mehrerer Wärmeträgheitseigenschaften eines oder mehrerer Bauteile des Ofens (1), die aus einem physikalischen oder virtuellen Sensor hervorgehen.

13. Verfahren nach dem vorstehenden Anspruch, **dadurch gekennzeichnet, dass** die eine oder mehreren Wärmeträgheitseigenschaften eine Masse und/oder eine Temperatur und/oder eine spezifische Wärme umfasst.

14. Verfahren nach Anspruch 12 oder 13, **dadurch gekennzeichnet, dass** die Steuereinheit (6) imstande ist, die Heizeinheit (2) und/oder das Schnellheizelement (2a) auf der Grundlage einer Temperatur eines Bauteils des Ofens (1) und/oder auf der Grundlage einer spezifischen Wärmekapazität eines Bauteils des Ofens (1) zu steuern, und dadurch, dass
- der Schritt a) weiter die Bestimmung einer Temperatur eines Bauteils des Ofens (1) und/oder einer spezifischen Wärmekapazität eines Bauteils des Ofens (1) umfasst,
- der Schritt b) weiter ein Bereitstellen einer Temperatur eines Bauteils des Ofens (1) und/oder einer spezifischen Wärmekapazität eines Bauteils des Ofens (1) umfasst,
- der Schritt c) weiter die Steuerung der Heizeinheit (2) und/oder des Schnellheizelements (2a) auf der Grundlage einer Temperatur eines Bauteils des Ofens (1) und/oder auf der Grundlage einer spezifischen Wärmekapazität eines Bauteils des Ofens (1) umfasst.

15. Verfahren nach einem der Ansprüche 12 bis 14, **dadurch gekennzeichnet, dass** der Ofen (1) weiter umfasst:
- Walzen (7) zum Befördern und/oder Leiten des Metallprodukts (5) im Ofen (1), und dadurch, dass:
- der Schritt a) weiter die Bestimmung einer oder mehrerer Wärmeträgheitseigenschaften einer oder mehrerer Walzen (7) umfasst;
- der Schritt b) weiter ein Bereitstellen einer oder mehrerer Wärmeträgheitseigenschaften einer oder mehrerer Walzen (7) an die Steuereinheit umfasst;
- der Schritt c) weiter die Steuerung auf der Grundlage einer oder mehrerer Wärmeträgheitseigenschaften einer oder mehrerer Walzen (7) umfasst.

16. Verfahren nach einem der Ansprüche 12 bis 15, **dadurch gekennzeichnet, dass**
- der Schritt a) weiter die Bestimmung einer Wärmeträgheitseigenschaft einer Wand (8) umfasst;
- der Schritt b) weiter ein Bereitstellen einer Wärmeträgheitseigenschaft einer Wand (8) an die Steuereinheit umfasst;
- der Schritt c) weiter die Steuerung auf der Grundlage einer Wärmeträgheitseigenschaft einer Wand (8) umfasst.

17. Verfahren nach einem der Ansprüche 12 bis 16, **dadurch gekennzeichnet, dass** die mindestens eine Heizeinheit (2) ein Strahlungsheizrohr (2b) umfasst, und dadurch, dass der Schritt c) der Steuerung weiter ermöglicht, das Strahlungsheizrohr (2b) zu steuern, und dadurch, dass
- der Schritt a) weiter die Bestimmung mindestens einer Temperatur des Strahlungsheizrohrs (2b) umfasst;
- der Schritt b) weiter ein Bereitstellen mindestens einer Temperatur des Strahlungsheizrohrs (2b) umfasst;
- der Schritt c) weiter die Steuerung auf der Grundlage mindestens einer Temperatur des Strahlungsheizrohrs (2b) umfasst.

## Claims

1. Furnace (1) for thermal treatment of a metal product (5) by moving and comprising constitutive elements each having a thermal inertia property, said constitutive elements comprising:
- walls (8) at least partially delimiting said furnace (1);
- a heating unit (2) for heating a metal product (5) when the latter is at least partially in said furnace (1);
- a rapid heating element (2a) for heating a metal product (5), when the latter is at least partially in said furnace (1), said rapid heating element (2a) being separate from said heating unit (2);
said furnace (1) further comprising:
a control unit (6) for controlling said heating unit (2) and/or the rapid heating element (2a) based on one or more thermal inertia properties of one or more constitutive elements of said furnace (1), coming from a physical or virtual sensor, and at least based on a mass of one constitutive element of said furnace (1);
said control unit (6) further being configured to control a moving speed of a metal product (5) in said furnace (1) based on one or more thermal inertia properties of one or more constitutive elements of said furnace (1) coming from a physical or virtual sensor.

2. Furnace (1) according to the preceding claim **characterised in that** one or more thermal inertia properties comprises a mass, and/or a temperature, and/or a specific heat.

3. Furnace (1) according to any of the preceding claims **characterised in that** said control unit (6) is able to control said heating unit (2) and/or the rapid heating element (2a) based on a temperature of a constitutive element of said furnace (1) and/or based on a specific heat capacity of a constitutive element of said furnace (1).

4. Furnace (1) according to any of the preceding claims **characterised in that** said constitutive elements further comprise one or more rollers (7) to transport and/or guide said metal product (5) in said furnace (1) and **in that** said control unit (6) is able to control said heating unit (2) and/or the rapid heating element (2a) based on one or more thermal inertia properties of one or more rollers (7) and preferably, based on one or more temperatures of one or more rollers (7).

5. Furnace (1) according to any of the preceding claims **characterised in that** said control unit (6) is able to control said heating unit (2) and/or the rapid heating element (2a) based on a thermal inertia property of a wall (8).

6. Furnace (1) according to any of the preceding claims **characterised in that** said rapid heating element (2a) is a heating element by induction (2a) to vary the temperature by induction of a metal product (5).

7. Furnace (1) according to any of the preceding claims **characterised in that** the walls (8) are further **characterised by** wall temperatures, wall thicknesses and wall heat capacities, and **in that** the control unit (6) is able to control said at least one heating unit (2) and/or said rapid heating element (2a) based on:
- wall (8) temperatures,
- wall (8) thicknesses, and
- wall (8) heat capacities.

8. Furnace (1) according to any of the preceding claims **characterised in that** said heating unit (2) comprises a radiant heating tube (2b) having a thermal inertia property determined from a radiant heating tube (2b) temperature and/or from a radiant heating tube (2b) heat capacity and/or from a radiant heating tube (2b) thickness.

9. Furnace (1) according to the preceding claim **characterised in that** said control unit (6) is further configured to control said at least one heating unit (2), or said rapid heating element (2a), or said radiant heating tube (2b) based on a property of a metal product (5) configured to continuously roll in said furnace (1).

10. Furnace (1) according to any of the preceding claims comprising:
- a first portion for varying the temperature of a metal product (5) comprising at least one heating unit (2) or a rapid heating element (2a), and,
- a second portion for maintaining the temperature of a metal product (5) comprising at least one heating unit (2) or a rapid heating element (2a),
**characterised in that** said control unit (6) is able to:
- control said heating unit (2) or said rapid heating element (2a) of said first portion for varying the temperature of a metal product (5), and,
- control aid heating unit (2) or said rapid heating element (2a) of said second portion for varying or maintaining the temperature of a metal product (5).

11. Furnace (1) according to any of the previous claims further comprising means for determining (4) able to determine at least one physical parameter for determining one or more thermal inertia property of one or more constitutive elements of the furnace (1).

12. Method for controlling the temperature of a metal product (5) in a furnace (1) for the thermal treatment of said metal product (5),
- said furnace (1) comprising constitutive elements each having a thermal inertia property, said constitutive elements comprising:
∘ walls (8) at least partially delimiting said furnace (1);
∘ at least one heating unit (2) for heating a metal product (5) when the latter is at least partially in said furnace (1);
∘ a rapid heating element (2a) for heating a metal product (5) when the latter is at least partially in said furnace (1), said rapid heating element (2a) being separate from said heating unit (2);
- said furnace (1) further comprising:
∘ a control unit (6) for controlling said at least one heating unit (2) and/or the rapid heating element (2a), said control unit (6) being further configured to control the rolling speed of a metal product (5) in said furnace (1);
- said method comprising the following steps:
a) determining one or more thermal inertia properties of one or more constitutive elements of said furnace (1), a thermal inertia property of a constitutive element of said furnace (1) being at least one mass of a constitutive element of said furnace (1);
b) supplying to the control unit (6) said one or more thermal inertia properties of one or more constitutive elements of said furnace (1), of which a thermal inertia property of a constitutive element of said furnace (1) being at least one mass of a constitutive element of said furnace (1), determined in the preceding step;
c) controlling with the control unit (6):
∘ said at least one heating unit (2) and/or the rapid heating element (2a) based on one or more thermal inertia properties of one or more constitutive elements of said furnace (1) coming from a physical or virtual sensor, and at least based on a mass of a constitutive element of said furnace (1) determined in step a) and supplied in step b);
∘ said rolling speed of a metal product (5) in said furnace (1) based on one or more thermal inertia properties of one or more constitutive elements of the furnace (1) coming from a physical or virtual sensor.

13. Method according to the preceding claim **characterised in that** one or more thermal inertia properties comprises a mass, and/or a temperature, and/or a specific heat.

14. Method according to claim 12 or 13 **characterised in that** said control unit (6) is able to control said heating unit (2) and/or the rapid heating element (2a) based on a temperature of a constitutive element of said furnace (1) and/or based on a specific heat capacity of a constitutive element of said furnace (1), and **in that**,
- the step a) further comprises the determining of a temperature of a constitutive element of said furnace (1) and/or a specific heat capacity of a constitutive element of said furnace (1),
- the step b) further comprises supplying a temperature of a constitutive element of said furnace (1) and/or a specific heat capacity of a constitutive element of said furnace (1),
- the step c) further comprises the controlling of said heating unit (2) and/or the rapid heating element (2a) based on a temperature of a constitutive element of said furnace (1) and/or based on a specific heat capacity of a constitutive element of said furnace (1).

15. Method according to any of claims 12 to 14 **characterised in that** said furnace (1) further comprises:
- rollers (7) for transporting and/or guiding said metal product (5) in said furnace (1), and **in that**:
- the step a) further comprises the determining of one or more thermal inertia properties of one or more rollers (7);
- the step b) further comprises supplying to the control unit one or more thermal inertia properties of one or more rollers (7);
- the step c) further comprises the controlling based on one or more thermal inertia properties of one or more rollers (7).

16. Method according to any of claims 12 to 15 **characterised in that**
- the step a) further comprises the determining of a thermal inertia property of a wall (8);
- the step b) further comprises supplying to the control unit a thermal inertia property of a wall (8);
- the step c) further comprises the controlling based on a thermal inertia property of a wall (8).

17. Method according to any of claims 12 to 16 **characterised in that** said at least one heating unit (2) comprises a radiant heating tube (2b), and **in that** the step c) for controlling further makes it possible to control said radiant heating tube (2b), and **in that**
- the step a) further comprises the determining of at least one radiant heating tube (2b) temperature;
- the step b) further comprises supplying at least one radiant heating tube (2b) temperature;
- the step c) further comprises controlling based on at least one radiant heating tube (2b) temperature.
